# EUROPÄISCHE PATENTSCHRIFT

(11) **EP 3 991 556 B1**
(45) Veröffentlichungstag und Bekanntmachung des Hinweises auf die Patenterteilung: **03.12.2025**
(21) Anmeldenummer: 21203878.0
(22) Anmeldetag: 21.10.2021
(51) Int. Cl.: A01M 7/00

(54) **LANDWIRTSCHAFTLICHE FELDSPRITZE UND SPRITZVORRICHTUNG FÜR EINE LANDWIRTSCHAFTLICHE FELDSPRITZE**
AGRICULTURAL SPRAYER AND SPRAYING DEVICE FOR AGRICULTURAL SPRAYER
PULVÉRISATEUR AGRICOLE ET DISPOSITIF DE PULVÉRISATION POUR UN PULVÉRISATEUR AGRICOLE

(30) Priorität: 02.11.2020 DE 102020128771
(43) Veröffentlichungstag der Anmeldung: 04.05.2022
(73) Patentinhaber: HORSCH LEEB Application Systems GmbH, 94405 Landau an der Isar (DE)
(72) Erfinder: Leeb, Theodor, 94405 Landau an der Isar (DE); Leeb, Jonas, 94405 Landau an der Isar (DE)
(74) Vertreter: v. Bezold & Partner Patentanwälte - PartG mbB

(56) Entgegenhaltungen:
- WO-A1-2018/095800
- DE-A1- 102006 059 193
- DE-A1- 102019 203 102
- US-A1- 2018 228 079

## Beschreibung

Die Erfindung betrifft eine Spritzvorrichtung für eine landwirtschaftliche Feldspritze zum dosierten Ausbringen von Spritzflüssigkeit, vorzugsweise auf landwirtschaftlichen Nutzflächen. Die Spritzvorrichtung umfasst ein Spritzgestänge mit seitlichen Auslegern und mindestens eine Mischkammer zum Vermischen von Spritzflüssigkeit. Die Erfindung betrifft ferner eine landwirtschaftliche Feldspritze mit einer solchen Spritzvorrichtung.

Dokument DE 10 2006 059 193 A1 offenbart eine Spritzeinrichtung zum Ausbringen von Flüssigkeiten, wobei die Flüssigkeiten Spritzdüsen über zumindest eine Flüssigkeitsleitung in einstellbarer Menge zuführbar sind. Zumindest ein Wirkstoffmittel ist zunächst zur Vorverdünnung in zumindest eine unter Druck stehende Bypassleitung der Trägerflüssigkeit mittels zumindest einer Pumpe einspeisbar, wobei die Bypassleitung in zumindest eine zu den Spritzdüsen führende Trägerflüssigkeitsleitung mündet.

Dokument DE 10 2019 203 102 A1 offenbart eine Spritzeinrichtung zum Ausbringen von Flüssigkeiten, insbesondere für landwirtschaftliche Zwecke, mit zumindest einer Spritzdüse zum Ausspritzen der Flüssigkeit und mit zumindest einer Mischeinrichtung, die zumindest eine Mischkammer aufweist. In die Mischkammer münden zumindest ein erster Zulauf für eine Trägerflüssigkeit, zumindest zwei zweite Zuläufe für unterschiedliche Wirkstoffmittel und zumindest ein mit der Spritzdüse verbundener Ablauf münden.

Dokument US 2018/228079 A1 offenbart eine Vorrichtung zum Aufbringen einer Flüssigkeit auf den Boden, umfassend eine faltbare Verteilerschiene zum Aufnehmen und Abgeben eines Flüssigkeitsstroms. Die faltbare Verteilerschiene besteht aus einer Vielzahl von Abschnitten aus rostfreiem Stahl und weist einen abnehmenden Innendurchmesser von einem Einlass der Verteilerschiene zu einem distalen Ende der Verteilerschiene auf.

Dokument WO 2018/095800 A1 offenbart ein Verfahren zur Applikation eines Konzentrats in verdünnter Form, wobei ein Konzentrat aus einem Konzentratbehälter durch eine oder mehrere Konzentratleitungen in Richtung mindestens eines Auslasses gefördert wird, das Konzentrat mit einem Verdünnungsmittel verdünnt wird, und das mit dem Verdünnungsmittel verdünnte Konzentrat appliziert wird.

Landwirtschaftliche Feldspritzen werden zum Ausbringen bzw. zur Applikation von flüssigen Wirkstoffen, z. B. Pflanzenschutz- und/oder Düngemittel, verwendet. Derartige Feldspritzen mit einem quer zur Fahrtrichtung orientierten und über einen Pflanzenbestand bewegten Spritzgestänge sind in unterschiedlichen Ausführungsvarianten bekannt.

Mit derartigen Feldspritzen soll das Ziel verfolgt werden, ein definiertes Flüssigkeitsvolumen an Spritzflüssigkeit, z. B. Pflanzenschutz- und/oder Düngemittel, gleichmäßig und mit definierbarer Intensität auf einem Pflanzenbestand auszubringen. Um die Spritzflüssigkeit großflächig auf den zu bearbeitenden Nutzflächen auszubringen, weisen Spritzgestänge derartiger Feldspritzen seitliche faltbare Ausleger mit großer Arbeitsbreite auf, teilweise von mehr als zwanzig Metern. Für Transportfahrten werden solch breite Spritzgestänge gefaltet und eingeklappt. Im ausgeklappten Zustand sind die Ausleger quer zur Fahrtrichtung angeordnet. Am Spritzgestänge sind zum dosierten Ausbringen der Spritzflüssigkeit in Abständen zueinander angeordnete Ausbringelemente, z. B. Spritzdüsen, vorhanden. Die Ausbringelemente erzeugen einen zum Boden bzw. zum Pflanzenbestand hin ausgerichteten Sprühkegel zum gewünschten Verteilen der Spritzflüssigkeit.

Bei der heute praxisüblichen Verwendung von in einem großen Vorratsbehälter fertig angemischter Spritzflüssigkeit ist bei heterogenem Schaderregervorkommen oder Wachstumsstadien der Verbrauch an Pflanzenschutzmittel hoch, wenn in der Teilfläche die Schadschwelle unterschritten wird oder das Wachstumsstadium ausreichend ist und somit keine Applikation indiziert ist.

Um Überfahrten einzusparen und um die Wirkstoffzusammensetzung entsprechend den vorliegenden Erfordernissen auf der Ackerfläche schnell verändern zu können, sind aus dem Stand der Technik sog. "Direkteinspeisesysteme" bekannt, bei denen ein in einer Flüssigkeit gelöster Wirkstoff, z. B. ein auszubringendes Pflanzenschutzmittel, bei Bedarf zu einer Trägerflüssigkeit oder einer bereits fertig angemischten Spritzflüssigkeit per Direkteinspeisung zudosiert werden kann.

Die hier aus der Praxis bekannten Feldspritzen haben jedoch den Nachteil, dass es bei einer zentralen Zudosierung per Direkteinspeisung zu zeitlich starken Verzögerungen kommt, wenn der Einspeiseort zu weit von den Spritzdüsen entfernt ist und sich die Fluidstrecken vom Einspeiseort zu den einzelnen Spritzdüsen zudem deutlich unterscheiden. Dadurch tritt der sog. Schmetterlingseffekt auf, da das per Direkteinspeisung erzeugte Spritzflüssigkeitsgemisch nicht sofort an allen Spritzdüsen anliegt, sondern sich erst verzögert über die gesamte Arbeitsbreite aufbaut und es dadurch zu einer zumindest zeitweisen ungleichmäßigen Verteilung des Wirkstoffes kommt.

Um eine teilflächenspezifische Applikation zu ermöglichen, sind aus der Praxis ferner Feldspritzen bekannt, die mehrere voneinander unabhängige Flüssigkeitskreisläufe für verschiedene Wirkstoffmittel aufweisen. In Abhängigkeit der gewünschten teilflächenspezifischen Behandlung können die Flüssigkeitskreisläufe bzw. die diesen zugeordneten Ausbringdüsen entsprechend zu- bzw. weggeschaltet werden. Nachteilig an derartigen Ansätzen ist, dass in Abhängigkeit der Anzahl an verschiedenen Wirkstoffmittel jeweils voneinander getrennte Flüssigkeitskreisläufe an der Feldspritze aufgebaut werden müssen, welche wiederum kostenintensiv sind und viel Bauraum benötigen. Ebenso ist es möglich, dass sich die Spritzkegel der wenigstens zwei nebeneinander angeordneten Ausbringdüsen gegenseitig beeinflussen, wodurch die Verteilqualität wiederum verschlechtert wird.

Alternative Ansätze, bei denen die Direkteinspeisung bzw. Zudosierung eines Pflanzenschutzmittels erst unmittelbar in oder an jeder Spritzdüse erfolgt, vermeiden zwar zusätzliche Spritzdüsen, haben jedoch den Nachteil, dass an jeder Spritzdüse zusätzliche Ventiltechnik und eine Mischkammer vonnöten ist, was kostenaufwändig ist. Ferner erschwert der beschränkte Bauraum im Bereich der Spritzdüse eine homogene Vermischung.

Es ist somit eine Aufgabe der Erfindung, eine verbesserte Technik zum Ausbringen von Spritzflüssigkeit mittels eines Spritzgestänges bereitzustellen, mittels der Nachteile herkömmlicher Techniken vermieden werden können. Die Aufgabe der Erfindung ist es insbesondere, eine Technik zum Ausbringen von Spritzflüssigkeit mittels eines Spritzgestänges bereitzustellen, mittels welcher eine verbesserte Zudosierung einer Spritzflüssigkeit per Direkteinspeisung ermöglicht wird.

Die Aufgabe wird gelöst durch die Merkmale des unabhängigen Anspruchs. Vorteilhafte Weiterbildungen sind in den abhängigen Ansprüchen und der Beschreibung angegeben.

Gemäß einem allgemeinen Gesichtspunkt der Erfindung wird eine Spritzvorrichtung für eine landwirtschaftliche Feldspritze zum dosierten Ausbringen von Spritzflüssigkeit, vorzugsweise auf landwirtschaftlichen Nutzflächen, bereitgestellt.

Die Spritzvorrichtung umfasst zunächst mehrere Dosier- oder Versorgungssysteme, aus denen Spritzflüssigkeit bereitgestellt werden kann, jeweils mit einem Vorratsbehälter für Spritzflüssigkeit und Mitteln, um die Spritzflüssigkeit bei Bedarf aus dem jeweiligen Vorratsbehälter bereitzustellen, vorzugsweise dosiert bereitzustellen. Diese mehreren Dosier- oder Versorgungssysteme werden nachfolgend beschrieben. Zur besseren Unterscheidung werden hierbei die Begriffe, erste(s), zweite(s), dritte(s) etc. verwendet, um z. B. das erste Dosiersystem und dessen Spritzflüssigkeit (erste Spritzflüssigkeit) besser vom einen weiteren, z. B. drittem Dosiersystem und dessen Spritzflüssigkeit (dritte Spritzflüssigkeit) zu unterscheiden etc.

Die Spritzvorrichtung umfasst somit ein erstes Dosiersystem mit einem ersten Vorratsbehälter für eine erste Spritzflüssigkeit und einer ersten Dosiereinrichtung. Bei dem ersten Vorratsbehälter kann es sich um den Haupttank der Spritzvorrichtung bzw. einer Feldspritze handeln, d. h. um den Tank, der die Hauptmischung enthält. Unter Hauptmischung wird diejenige, üblicherweise bereits fertig angemischte, Spritzflüssigkeit verstanden, die zum Großteil von der Spritzvorrichtung bzw. der Feldspritze bei einem bevorstehenden Spritzvorgang verwendet werden soll und/oder die im größten Spritzflüssigkeitsvorratsbehälter der Feldspritze bevorratet ist. Die erste Spritzflüssigkeit kann jedoch auch Klarwasser oder eine andere Trägerflüssigkeit sein. Die erste Dosiereinrichtung ist ausgebildet, die erste Spritzflüssigkeit aus dem ersten Vorratsbehälter dosiert bereitzustellen. Die erste Dosiereinrichtung kann einen Durchflussmesser und eine Druckerzeugungseinheit, vorzugsweise eine Pumpe umfassen.

Die Spritzvorrichtung umfasst ferner ein zweites Dosier- oder Versorgungssystem, umfassend einen zweiten Vorratsbehälter für eine zweite Spritzflüssigkeit, beispielsweise Klarwasser oder auch eine andere Trägerflüssigkeit, und eine zweite Dosier- oder Fluidversorgungseinrichtung. Dieses zweite Dosier- oder Versorgungssystem dient nicht zwingend dazu, um eine exakte bzw. wohl dosierte Menge an Spritzflüssigkeit bereitzustellen, sondern könnte auch als Versorgungstank fungieren, aus dem die zweite Spritzflüssigkeit bei Bedarf bereitstellbar ist, ohne dass z. B. ein Dosierventil zur genauen Dosierung hierfür vorgesehen ist. Deswegen wurde hier der Begriff Dosier- oder Versorgungsystem bzw. Dosier- oder Fluidversorgungseinrichtung gewählt, um diesen Aspekt zu verdeutlichen. Erfindungsgemäß umfasst die zweite Dosier- oder Fluidversorgungseinrichtung einen Durchflussmesser, ein Rückschlagventil und eine Druckerzeugungseinheit, vorzugsweise eine Pumpe. Es ist möglich, dass die zweite Dosier- oder Versorgungseinrichtung kein Dosierventil umfasst. Erfindungsgemäß ist der zweite Vorratsbehälter ein Wassertank.

Die Spritzvorrichtung umfasst ferner ein drittes Dosiersystem, umfassend mindestens eine dritte Dosiereinrichtung und mindestens einen dritten Vorratsbehälter und/oder mindestens eine Behälteraufnahme zur lösbaren Halterung eines dritten Vorratsbehälters für mindestens eine dritte Spritzflüssigkeit oder Wirkstoffmittel. Der dritte Vorratsbehälter ist bevorzugt ein Kanister und/oder die Behälteraufnahme ist bevorzugt eine Halterung für einen solchen Kanister, der dort wechselbar gehaltert werden kann. Bei der dritten Spritzflüssigkeit oder Wirkstoffmittel kann es sich um ein Pflanzenschutzmittel handeln, vorzugsweise in konzentrierter Form. Das Pflanzenschutzmittel kann ein Wachstumsregler, Fungizid, Insektizid, Pestizid und/oder dergl. in flüssiger Form sein. Denkbar ist ferner ein Granulat, das in Flüssigkeit gelöst werden kann oder ist. Das Volumen des dritten Vorratsbehälters ist bevorzugt kleiner, meist wesentlich kleiner als das Volumen des ersten und/oder zweiten Vorratsbehälters.

Es können auch mehrere derartige dritte Behälteraufnahmen und/oder dritte Vorratsbehälter mit entsprechender dritter Dosiereinrichtung als Teil des dritten Dosiersystems vorgesehen sein, um z. B. unterschiedliche dritte Spritzflüssigkeiten, z. B. unterschiedliche Pflanzenschutzmittel, mitzuführen, die bei Bedarf zugemischt werden können. Erfindungsgemäß umfasst die mindestens eine dritte Dosiereinrichtung jeweils ein Dosierventil, einen Durchflussmesser und eine Druckerzeugungseinheit, vorzugsweise eine Pumpe.

Die Spritzvorrichtung umfasst ferner ein schwenkbares Spritzgestänge, umfassend zwei seitliche Ausleger. Hierbei ist das Spritzgestänge, und vorzugsweise jeder der Ausleger, in mehrere Teilabschnitte unterteilt. An jedem Teilabschnitt ist eine Mehrzahl von Ausbringelementen zum Versprühen und/oder Feinverteilen der Spritzflüssigkeit angeordnet und jedes Ausbringelement ist genau einem Teilabschnitt zugeordnet.

Die Spritzvorrichtung umfasst ferner mehrere Mischkammern, wobei jedem Teilabschnitt jeweils eine der Mischkammern zugeordnet ist, die stromauf zu den dem jeweiligen Teilabschnitt zugeordneten Ausbringelementen angeordnet ist. Diese Mischkammern werden nachfolgend als erste Mischkammern bezeichnet, zur besseren Unterscheidung von einer nachfolgenden noch beschriebenen optional weiteren Mischkammer, die als Hauptmischkammer bezeichnet wird.

Die ersten Mischkammern sind eingangsseitig an eine erste Zufuhrleitung fluidisch angeschlossen, der die erste Spritzflüssigkeit durch die erste Dosiereinrichtung zuführbar ist. Die erste Zufuhrleitung kann beispielsweise als Ringleitung oder Stichleitung ausgeführt sein.

Die Spritzvorrichtung umfasst ferner eine Steuereinrichtung, die ausgebildet ist, zum Versprühen und/oder Feinverteilen der Spritzflüssigkeit das erste Dosiersystem, das zweite zweites Dosier- oder Versorgungssystem, das dritte Versorgungssystem und die Ausbringelemente zu steuern und/oder zu regeln.

Diese Unterteilung in Teilabschnitte, denen jeweils eine Mischkammer und eine darüber versorgte Gruppe von Ausbringelementen zugeordnet ist, bietet in Kombination mit den drei Dosier- oder Versorgungssystemen den Vorzug, dass eine teilfächenspezifische Applikation per Direkteinspeisung auf kleineren Teilflächen ermöglicht wird, bei gleichzeitig reduzierten Verzögerungszeiten und verbessertem gleichmäßigen Ausbringen von Wirkstoff, insbesondere bei An- und Ausschaltvorgängen und Änderungen der Spritzflüssigkeit bzw. deren Mischung. Die Lösung ist ferner vorteilhaft im Hinblick auf den benötigten Bauraum und die Kosten für die benötigte Fluidtechnik.

Die einem Teilabschnitt zugeordnete erste Mischkammer ist vorzugsweise am Teilabschnitt am Ausleger angeordnet, so dass kurze Fluidstrecken von den Mischkammern zu den einzelnen Ausbringelementen möglich sind, wodurch sich kurze Verzögerungszeiten ergeben, bis eine in den ersten Mischkammern erzeugte Mischung aus Spritzflüssigkeiten die zugeordneten Ausbringelemente erreicht.

In einer Ausführungsform kann die Steuereinrichtung ausgebildet sein, den Ausbringelementen oder Ausbringelementen ausgewählter Teilabschnitte durch Ansteuerung der ersten Dosiereinrichtung, der zweiten Dosier- oder Fluidversorgungseinrichtung und der mindestens einen dritten Dosiereinrichtung wahlweise eine Mischung aus zumindest zwei der Spritzflüssigkeiten in einem festlegbaren Mischungsverhältnis oder nur eine der Spritzflüssigkeit zuzuführen, vorzugsweise in dem diese Spritzflüssigkeiten den ersten Mischkammern oder einer Teilauswahl hiervon in dem festlegbaren Mischungsverhältnis zugeleitet werden. Entsprechend kann das Mischungsverhältnis für die Teilabschnitte einzeln verändert werden. Alternativ oder zusätzlich kann die Steuereinrichtung zur Herstellung einer Mischung der ersten Spritzflüssigkeit mit der zweiten und/oder mindestens einen dritten Spritzflüssigkeit ausgebildet sein, das erste Dosiersystem derart anzusteuern und das zweite Dosier- oder Versorgungssystem und/oder das dritte Dosiersystem derart anzusteuern, dass allen ersten Mischkammern oder einer Teilauswahl hiervon sowohl die erste Spritzflüssigkeit als auch die zweite und/oder dritte Spritzflüssigkeit in dem festlegbaren Mengenverhältnis zugeführt wird.

Die Unterteilung in Teilabschnitte erfolgt in Längsrichtung der Ausleger bzw. des Spritzgestänges und kann optional einer Unterteilung des Spritzgestänges in Teilbreiten entsprechen, was nachfolgend noch näher beschrieben ist. Die Ausleger selbst können in Längsrichtung der Ausleger in mehrere Teilabschnitte unterteilt sein, wobei die Teilabschnitte und die zugeordneten Mischkammern und ggf. Fluidverteiler in Längsrichtung nebeneinander angeordnet sind. Entsprechend ist eine Gruppe von Ausbringelementen, die einem Teilabschnitt zugeordnet sind, in Längsrichtung benachbart zu einer weiteren Gruppe von Ausbringelementen angeordnet, die einem benachbarten Teilabschnitt und einer anderen ersten Mischkammer zugeordnet sind.

Gemäß einer besonders bevorzugten Ausführungsform ist eine weitere Mischkammer vorgesehen, nachfolgend zur besseren Unterscheidung von den zuvor beschriebenen ersten Mischkammern als Hauptmischkammer bezeichnet. Hierbei ist der Hauptmischkammer die zweite Spritzflüssigkeit durch die zweite Dosier- oder Fluidversorgungseinrichtung und die mindestens eine dritte Spritzflüssigkeit durch die mindestens eine dritte Dosiereinrichtung zuführbar. Gemäß dieser Ausführungsform sind die ersten Mischkammern eingangsseitig ferner an eine zweite Zufuhrleitung fluidisch angeschlossen, die mit der Hauptmischkammer fluidisch verbunden ist und Abzweige zur Versorgung der ersten Mischkammern aufweist. Hierbei sind ersten Mischkammern eingangsseitig jeweils an einen der Abzweige der zweiten Zufuhrleitung fluidisch angeschlossen. Die zweite Zufuhrleitung kann als Ringleitung oder Stichleitung ausgeführt sein. Diese Ausführungsform bietet den Vorteil, dass die dritte Spritzflüssigkeit, vorzugsweise ein Pflanzenschutzmittel, das in konzentrierter Form im dritten Vorratsbehälter bevorratet ist, mittels der Hauptmischkammer vorverdünnt werden kann, um eine nachfolgende Vermischung mit der ersten Spritzflüssigkeit in einer oder mehreren der ersten Mischkammern zu verbessern. Dadurch kann die Ausbringqualität verbessert werden.

In einer vorteilhaften Ausführungsvariante dieser Ausführungsform ist die Steuereinrichtung ausgebildet, in Abhängigkeit von einem Sollmischverhältnis der zweiten und dritten Spritzflüssigkeit die zweite Dosier- oder Fluidversorgungseinrichtung und die mindestens eine dritte Dosiereinrichtung derart anzusteuern, dass der Hauptmischkammer die zweite und dritte Spritzflüssigkeit eingangsseitig in dem Sollmischverhältnis zugeführt werden. Das Sollmischverhältnis kann abhängig davon festgelegt werden, welche dritte Spritzflüssigkeit momentan gemischt werden soll, so dass z. B. für unterschiedliche Pflanzenschutzmittel unterschiedliche Sollmischverhältnisse festgelegt werden können. Das Sollmischverhältnis kann optional durch eine Benutzereingabe oder automatisiert durch Einlesen über eine Datenschnittstelle festgelegt werden. Die dritte Spritzflüssigkeit kann entsprechend dem Sollmischverhältnis vorverdünnt werden.

Falls das dritte Dosiersystem mehrere dritte Vorratsbehälter mit entsprechenden dritten Dosiereinrichtungen aufweist, kann die Steuereinrichtung zur Bereitstellung dosierter Mengen an Pflanzenschutzmittel und/oder dritter Spritzflüssigkeit ausgebildet sein, die dritten Dosiereinrichtungen derart anzusteuern, dass der Hauptmischkammer wahlweise eines oder mehrere der Pflanzenschutzmittel in einer festlegbaren Dosiermenge zugeführt werden. Unterschiedliche Pflanzenschutzmittel können so bei Bedarf per Direkteinspeisung zudosiert werden.

In einer vorteilhaften weiteren Ausführungsvariante dieser Ausführungsform sind jeweils in den Abzweigen vierte Dosiereinrichtungen angeordnet zum Steuern und/oder Regeln einer den ersten Mischkammern aus der zweiten Zufuhrleitung zugeführten Menge an Spritzflüssigkeit. Dies bietet den Vorteil, dass die einer bestimmten ersten Mischkammer zugeführte Spritzflüssigkeit aus der Hauptmischkammer genau eingestellt werden kann und somit die Menge des über den zweiten Einlass der jeweiligen ersten Mischkammer eingespeisten Wirkstoffs. Eine präzise teilflächenspezifische Ausbringung einer gewünschten Wirkstoffkonzentration wird damit weiter verbessert. Die vierte Dosiereinrichtung ist beispielsweise jeweils in einem Abzweig angeordnet, der die zweite Zufuhrleitung mit der jeweiligen Mischkammer verbindet. Die vierten Dosiereinrichtungen können jeweils einen Durchflussmesser und ein Dosierventil umfassen.

Die Steuereinrichtung kann ausgebildet sein, die vierten Dosiereinrichtungen, vorzugsweise deren Dosierventil, jeweils in Abhängigkeit von einer Größe anzusteuern und/oder zu regeln, die ein Maß für eine Sollausbringmenge an zweiter und/oder dritter Spritzflüssigkeit angibt, die durch die Ausbringelemente desjenigen Teilabschnitts ausgegeben werden sollen, der von der jeweiligen vierten Dosiereinrichtung versorgt wird. Somit kann eine präzise teilflächenspezifische Direkteinspeisung ermöglicht werden.

Vorstehend wurde bereits festgestellt, dass die Dosiereinrichtungen Durchflussmesser aufweisen können. In einer weiteren Ausführungsvariante kann die Steuereinrichtung ausgebildet sein, die zweite Dosier- oder Fluidversorgungseinrichtung und/oder die mindestens eine dritte Dosiereinrichtung so anzusteuern, dass eine Summe der mit den Durchflussmessern der zweiten Dosier- oder Fluidversorgungseinrichtung und der mindestens einen dritten Dosiereinrichtung gemessenen Durchflussmenge gleich ist zur Summe der mit den Durchflussmessern der vierten Dosiereinrichtungen gemessenen Durchflussmenge. Insbesondere wenn mehrere dritte Vorratsbehälter mit entsprechenden dritten Dosiereinrichtungen vorgesehen sind, wird hierdurch eine zuverlässige Vermischung und Zuleitung zu den ersten Mischkammern sichergestellt.

In einer weiteren Ausführungsform sind weitere Dosiereinrichtungen, nachfolgend als fünfte Dosiereinrichtungen bezeichnet, vorgesehen, über die die ersten Mischkammern an die erste Zufuhrleitung fluidisch angeschlossen sind, wobei die fünften Dosiereinrichtungen jeweils ein Dosierventil umfassen. Dann können den ersten Mischkammern jeweils auch unterschiedliche Mengen der ersten Spritzflüssigkeit, z. B. des "Hauptmittels", zugeführt werden.

Vorstehend wurde erwähnt, dass die ersten Mischkammern eingangsseitig an eine zweite Zufuhrleitung fluidisch angeschlossen sein können, die mit der Hauptmischkammer fluidisch verbunden ist. Diese Zufuhrleitung kann z. B. als Ringleitung ausgeführt sein. In einer weiteren Ausführungsform weist die zweite Zufuhrleitung einen Abschnitt auf, vorzugsweise einen entlang des Spritzgestänges geführten Abschnitt, dessen Innendurchmesser in Strömungsrichtung kleiner wird, vorzugsweise schrittweise kleiner wird, wobei sich der Abschnitt entlang von Abzweigstellen der Abzweige von der zweiten Zufuhrleitung erstreckt.

Der Flüssigkeitsstrom innerhalb der zweiten Zufuhrleitung wird schrittweise reduziert, wenn Spritzflüssigkeit hieraus über die Abzweige zu den Einlässen der ersten Mischkammern abgezweigt wird, was zu einem Druckverlust und damit zu reduzierter Fließgeschwindigkeit entlang der zweiten Zufuhrleitung führt. Der kleiner werdende Innendurchmesser bietet den Vorzug, dass dadurch einem derartigen Druckverlust bzw. reduzierter Fließgeschwindigkeit entgegengewirkt werden kann, wodurch wiederum die Verzögerungszeiten bei der Zuführung der vermischten Spritzflüssigkeit zu den Ausbringelementen reduziert und die Ausbringqualität verbessert werden kann.

Eine schrittweise, d. h. in diskreten Schritten, erfolgende Verkleinerung des Innendurchmessers ist besonders vorteilhaft, da entsprechend Leitungsabschnitte mit genormten Innendurchmessern oder Nenndurchmessern verwendet werden können.

In einer weiteren Ausführungsvariante hiervon wird der kleiner werdende Innendurchmesser so festgelegt, dass eine Strömungsgeschwindigkeit der Spritzflüssigkeit an mindestens einer Abzweigstelle, die stromab zu einer ersten Abzweigstelle liegt, mindestens so hoch ist wie an der ersten Abzweigstelle. Alternativ oder zusätzlich kann der kleiner werdende Innendurchmesser so festgelegt werden, dass eine Strömungsgeschwindigkeit der Spritzflüssigkeit in dem Abschnitt nicht kontinuierlich abnimmt und/oder zwischen der ersten und letzten Abzweigstelle um nicht mehr als 2 m/s, weiter vorzugsweise um nicht mehr als 1 m/s schwankt. Die schnelle Bereitstellung einer zudosierten dritten Spritzflüssigkeit, z. B. Pflanzenschutzmittel, an den ersten Mischkammern wird hierdurch weiter verbessert. Ein entsprechend zweckmäßig kleiner werdender Innendurchmesser kann durch entsprechendes Experimentieren mit unterschiedlichen Innendurchmessern entlang des Abschnitts festgelegt werden.

In einer weiteren Ausführungsvariante können verwendeten Dosiereinrichtungen, beispielsweise die erste Dosiereinrichtung, die mindestens eine dritte Dosiereinrichtung, und/oder die vierte Dosiereinrichtung ein als pulsweitenmoduliertes (PWM) Ventil ausgebildetes Dosierventil umfassen.

Derartige Dosierventile sind mittels Pulsweitenmodulation ansteuerbar und/oder regelbar, was eine besonders präzise Dosierung der Spritzflüssigkeit ermöglicht.

Es ist ferner optional möglich, dass im dritten Vorratsbehälter zusätzlich ein Rührwerk vorgesehen ist, um z. B. Anlagerungen des jeweiligen Mittels im Vorratsbehälter zu verhindern. Eine Reinigung des Spritzsystem bzw. der Dosiersysteme kann in einer aus dem Stand der Technik bekannten Art und Weise erfolgen. Alternativ oder zusätzlich kann vorgesehen sein, dass der dritte Vorratsbehälter zu Reinigungszwecken über eine zusätzliche Leitung, z. B. eine Spülleitung, und ein dieser Leitung zugeordnetem Ventil und/oder Pumpe wahlweise mit Klarwasser gespeist werden kann, beispielsweise mit Klarwasser aus dem ersten Dosiersystem und/oder dem zweiten Dosier- oder Versorgungssystem.

Weitere vorteilhafte Ausführungsformen betreffen die Ausführung der ersten Mischkammern und die Ausgestaltung der fluidischen Verbindung zwischen den ersten Mischkammern und den jeweils zugeordneten Ausbringelementen.

Die erste Mischkammer kann ausgangsseitig mehrere Verteilerauslässe aufweisen, wobei die stromab zu der jeweiligen ersten Mischkammer angeordneten Ausbringelemente jeweils über eine Ausbringleitung mit einem der Verteilerauslässe verbunden sind. Alternativ kann stromab zu einem Auslass der ersten Mischkammer ein Fluidverteiler zum Aufteilen von Spritzflüssigkeit auf mehrere Teilströme angeordnet sein, aufweisend mehrere Verteilerauslässe für die Teilströme, wobei die stromab zu der jeweiligen ersten Mischkammer angeordneten Ausbringelemente jeweils über eine Ausbringleitung mit einem der Verteilerauslässe des Fluidverteilers verbunden sind.

Mit anderen Worten ist in einer solchen Ausführungsform jedem der Teilabschnitte somit mindestens eine Einrichtung zum Vermischen mindestens zweier Spritzflüssigkeiten und zum Verteilen der vermischten Spritzflüssigkeiten auf mehrere Teilströme angeordnet. Die Einrichtung hat somit zwei Funktionen, nämlich das Vermischen von zugeführten Spritzflüssigkeiten und das anschließende Verteilen, was auch als Aufteilen oder Verzweigen bezeichnet werden kann, der vermischten Spritzflüssigkeit auf mehrere Teilströme, die in Form mehrerer hydraulisch paralleler Teilströme über die Verteilerauslässe ausgeleitet werden. Hierzu umfasst diese Einrichtung die Mischkammer und, stromab von der Mischkammer, den Fluidverteiler als funktionale Komponenten. Die Mischkammer und der Fluidverteiler können hierbei als bauliche Einheit und damit als kombinierte Mischkammer-Fluidverteilereinheit bzw. als Mischkammer mit integrierter Fluidverteilerfunktion oder als zwei getrennte Bauteile ausgeführt sein. Der Begriff "Verteilerauslass" kann sich somit je nach Ausführungsvariante auf den Verteilerauslass der Mischkammer mit integriertem Fluidverteiler beziehen oder auf den Verteilerauslass des Fluidverteilers beziehen. Die Mischkammer und/oder der Fluidverteiler sind bevorzugt an einem Ausleger des Spritzgestänges angeordnet.

Das Aufteilen der in den ersten Mischkammern vermischten Spritzflüssigkeiten auf mehrere Teilströme, wobei den Ausbringelementen jeweils über einen der Verteilerauslässe einer der Teilströme an vermischter Spritzflüssigkeit zugeleitet wird, bietet mehrere Vorteile.

Erstens kann die zeitliche Verzögerung, bis eine in der Mischkammer erzeugte Mischung die Ausbringelemente erreicht, geringgehalten werden, da die Ausbringelemente eines Auslegers nicht durch ein gemeinsames Düsenrohr gespeist werden, sondern durch unterschiedliche Leitungen, hier als Ausbringleitung oder auch als Düsenleitung bezeichnet. Auf ein herkömmliches, längs am Ausleger verlaufendes langes Düsenrohr zur Speisung von mehreren Ausbringelementen, z. B. Spritzdüsen, kann in dieser Ausführungsvariante somit verzichtet werden. Stattdessen werden die Ausbringelemente über die an den Verteilerauslässen angeschlossenen Ausbringleitungen gespeist, um den Ausbringelementen über hydraulisch parallele Teilströme Spritzflüssigkeit zuzuführen. Da die Ausbringleitungen nur Teilströme weiterleiten, um z. B. nur eine oder zwei Spritzdüsen mit Spritzflüssigkeit zu versorgen, können diese im Vergleich zu einem herkömmlichen Düsenrohr mit kleinerem Durchmesser ausgeführt werden und ermöglichen somit entsprechend höhere Förderungsdrücke und höhere Fördergeschwindigkeiten. Dadurch kann der durchschnittliche Zeitverzug selbst reduziert werden

Zweitens können Unterschiede in den zeitlichen Verzögerungen, bis eine in der Mischkammer erzeugte Mischung die einzelnen Ausbringelemente erreicht, die zum vorgenannten Schmetterlingseffekt führt, verhindert oder zumindest reduziert werden. Der Grund liegt darin, dass eine Mischung von Spritzflüssigkeit nicht, wie es bei Verwendung eines herkömmlichen gemeinsamen Düsenrohrs der Fall wäre, die Ausbringelemente nacheinander erreicht, sondern diese über die Ausbringleitungen gespeist werden, um den Ausbringelementen über hydraulisch parallele Teilströme Spritzflüssigkeit zuzuführen. Dies bietet den Vorteil, dass Unterschiede in den Zeitverzügen, bis die durch die Mischkammer vermischte Spritzflüssigkeit die einzelnen Ausbringelemente erreicht, entsprechend reduziert und je nach Ausführungsform sogar verhindert werden können. Dies ermöglicht ein gleichmäßigeres Ausbringen von Spritzflüssigkeit, insbesondere beim Anschalten, d. h. beim Start des Spritzvorgangs, oder beim Wechsel der Spritzflüssigkeit bzw. deren Mischung.

In einer weiteren bevorzugten Ausführungsform sind die Ausbringleitungen derart ausgelegt, vorzugsweise derart dimensioniert, dass die einer ersten Mischkammern oder ggf. Fluidverteiler zugeordneten Teilströme auf ihren getrennten Teilströmungswegen von den Verteilerauslässen zu den jeweiligen Ausbringelementen im Wesentlichen den gleichen Druckabfall und gleichen Zeitverzug, bis die Teilströme an dem jeweiligen Ausbringelement ankommen, aufweisen. Unter dem gleichen Zeitverzug können Unterschiede in den Zeitverzügen von kleiner 5 Sekunden, vorzugsweise kleiner 3 Sekunden, verstanden werden. Diese Ausbringleitungen können entsprechend ausgelegt werden, indem die Länge und/oder der Durchmesser der Ausbringleitungen, die an der gleichen Mischkammer angeschlossen sind, zweckmäßig festgelegt wird. Der Durchmesser der Ausbringleitungen ist bevorzugt gleich groß.

In einer weiteren Ausführungsvariante ist jedes der Ausbringelemente über eine separate Ausbringleitung mit einem der Verteilerauslässe fluidisch verbunden. Anders ausgedrückt verbindet jede Ausbringleitung in dieser Variante genau ein Ausbringelement mit einem Verteilerauslass. Gemäß dieser Ausführungsvariante weisen die Ausbringleitungen somit keine Verzweigung zwischen dem Verteilerauslass und dem Ausbringelement auf. Unterschiede in den Zeitverzügen, bis die Spritzflüssigkeit die einzelnen Ausbringelemente erreicht, können hier entsprechend besonders vorteilhaft reduziert und je nach Ausführungsform sogar verhindert werden.

In einer alternativen Ausführungsform weist zumindest eine der Ausbringleitungen, vorzugsweise alle Ausbringleitungen, jeweils zumindest eine Verzweigungsstelle auf, die eine Mehrzahl von Leitungszweigen bereitstellt, wobei jeweils ein Leitungszweig die Verzweigungsstelle mit einem Ausbringelement verbindet. An der Verzweigungsstelle wird der vom Verteilerauslass kommende Teilvolumenstrom nochmals aufgeteilt. Im Vergleich zu separaten Ausbringleitungen für alle Ausbringelemente kann hier für die Ausbringleitungen benötigter Bauraum optimiert werden. Die Verzweigungsstelle kann nach Art einer Y-Verzweigung oder nach Art einer T-Verzweigung ausgebildet sein, beispielsweise durch ein T-Stück oder ein zweckmäßig ausgeführtes Verbindungsstück. In einer bevorzugten Ausführungsvariante ist genau eine solche Verzweigungsstelle je Ausbringleitung vorgesehen.

In einer weiteren Ausführungsform kann die Anzahl der Verteilerauslässe des Fluidverteilers oder der Mischkammer mit integrierter Fluidverteilerfunktion im Bereich von 4 bis 16 oder im Bereich von 6 bis 12 liegen. Dies ermöglicht einen vorteilhaften Kompromiss aus kurzen Verzögerungszeiten und Anzahl an benötigten Mischkammern. Je nach Gesamtanzahl der Ausbringelemente werden somit mehrere in Längsrichtung des Auslegers verteilt angeordnete Mischkammern benötigt.

In einer weiteren Ausführungsvariante weisen diejenigen Ausbringleitungen, die am gleichen Fluidverteiler oder an der gleichen Mischkammer mit integrierter Fluidverteilerfunktion angeschlossen sind, jeweils die gleiche Länge auf. Anders ausgedrückt haben in dieser Ausführungsform alle Ausbringleitungen jeweils eines Fluidverteilers oder jeweils einer Mischkammer mit integrierter Fluidverteilerfunktion die gleiche Länge, wohingegen optional die Möglichkeit besteht, dass Ausbringleitungen von verschiedenen Fluidverteilern oder Mischkammern mit integrierter Fluidverteilerfunktion unterschiedlich lang sein können. Hierbei können alle Ausbringleitungen jeweils eines Fluidverteilers oder einer Mischkammer mit integrierter Fluidverteilerfunktion ferner bevorzugt den gleichen Durchmesser aufweisen und entsprechend den gleichen Druckabfall innerhalb der Ausbringleitung aufweisen. Dies bietet den Vorzug, dass Unterschiede in den Zeitverzügen, bis die aus ersten Mischkammer austretende Spritzflüssigkeit die Ausbringelemente erreicht, vermieden oder zumindest reduziert werden.

Gemäß einer Ausführungsvariante weisen jedoch alle Ausbringleitungen der Spritzvorrichtung die gleiche Länge auf. Anders ausgedrückt sind in dieser Variante alle Strömungswege durch die Ausbringleitungen zwischen einem Ausbringelement und dem jeweiligen Verteilerauslass gleich lang. Dies bietet den Vorzug, dass die Teilströmungswege vom Verteilerauslass zum Ausbringelement für alle Ausbringelemente gleich lang sind, obwohl die räumlichen Abstände der Ausbringelemente zum Verteilerauslass, über den sie gespeist werden, zum Teil stark unterschiedlich sein können. Besonders bevorzugt ist, wenn alle Ausbringleitungen der Spritzvorrichtung gleich lang sind und den gleichen Durchmesser aufweisen und entsprechend den gleichen Druckabfall innerhalb der Ausbringleitung aufweisen. Folglich können Differenzen in den Zeitverzügen, bis die aus den Verteilerauslässen austretende Spritzflüssigkeit die hierüber gespeisten Ausbringelemente erreicht, vorteilhaft verhindert werden.

In einer bevorzugten weiteren Ausführungsvariante sind die Ausbringleitungen als Schlauchleitungen und/oder als flexible Leitungen ausgeführt oder umfassen zumindest Abschnitte, die als Schlauchleitungen und/oder als flexible Leitungen ausgeführt sind. Dies ermöglicht eine kosteneffiziente, platzsparende Anbringung der Ausbringleitungen am Ausleger. Alternativ können die Ausbringleitungen auch als Rohre ausgeführt sein oder Rohrleitungen umfassen, beispielsweise aus einem metallischen Werkstoff.

In einer weiteren Ausführungsvariante weisen die Ausbringleitungen oder zumindest ein Teil der Ausbringleitungen einen nicht-geraden Verlauf oder anders ausgedrückt, einen gekrümmten Verlauf, auf. Beispielsweise können die Ausbringleitungen oder zumindest ein Teil der Ausbringleitungen mindestens einen Abschnitt aufweisen, der in Längsrichtung des Auslegers entlang eines der Ausleger geführt ist und mindestens einen Abschnitt aufweisen, der in Vertikalrichtung entlang eines der Ausleger geführt ist. Ferner besteht optional die Möglichkeit, dass zumindest ein Teil der Ausbringleitungen S-förmig oder mäanderförmig geführt ist.

In einer weiteren Ausführungsform können die Ausbringleitungen einen Innendurchmesser von kleiner 10 mm, weiter vorzugsweise von kleiner 6 mm, aufweisen. Der Innendurchmesser kann beispielsweise 4 mm aufweisen. Dadurch können im Vergleich zu herkömmlichen Düsenrohren wesentlich höhere Strömungsgeschwindigkeiten erreicht werden. In einer weiteren Ausführungsform können die Ausbringleitungen eine Mindestlänge von 25 cm oder von mindestens 50 cm oder von mindestens 1 Meter aufweisen.

Vorstehend wurde bereits festgestellt, dass es besonders vorteilhaft ist, wenn die Ausbringleitungen die gleiche Länge aufweisen. In einer weiteren Ausführungsform unterscheiden sich die Ausbringleitungen in ihren Längen um nicht mehr als 30%, wodurch die Differenzen in den Zeitverzügen, bis Spritzflüssigkeit über die Ausbringleitungen die Ausbringelemente erreicht, im Vergleich zu einem herkömmlichen Düsenrohr ebenfalls vorteilhaft reduziert werden können.

In einer weiteren Ausführungsform sind die Ausbringleitungen derart ausgelegt, vorzugsweise derart dimensioniert, dass ein Druckabfall in den Ausbringleitungen von den Verteilerauslässen bis zum jeweiligen Ausbringelement jeweils maximal 2 bar ist, weiter vorzugsweise jeweils maximal 1,5 bar ist. Dies kann durch entsprechende zweckmäßige Wahl des Durchmessers und Länge der Ausbringleitung realisiert werden. Dies verbessert das möglichst gleichmäßige Ausbringen der Spritzflüssigkeit.

Alternativ oder zusätzlich können die Ausbringleitungen derart ausgelegt sein, dass ein Zeitverzug der Teilströme für ihren Strömungsweg von der Mischkammer bis zum Erreichen der jeweiligen Ausbringelemente jeweils maximal 5 Sekunden, weiter vorzugsweise maximal 2 Sekunden, weiter vorzugsweise maximal 1 Sekunde, ist. Dies kann unter Berücksichtigung des am Auslass der Mischkammer im Spritzbetrieb anliegenden üblichen Fluiddrucks wiederum durch entsprechende zweckmäßige Wahl des Durchmessers und der Länge der Ausbringleitung realisiert werden. Dadurch können schnelle Reaktionszeiten beim An- und Abschalten des Spritzgestänges oder bei Wechsel der Spritzflüssigkeit ermöglicht werden.

In einer weiteren vorteilhaften Ausführungsform sind die Fluidverteiler und/oder die ersten Mischkammern der Teilabschnitte jeweils am Teilabschnitt angeordnet, optional ferner mittig in Längsrichtung des Auslegers am Teilabschnitt angeordnet. Anders ausgedrückt sind die Mischkammern und/oder Fluidverteiler mittig in Längsrichtung angeordnet zu der Gruppe an Ausbringelementen, die mit dem Fluidverteiler fluidisch verbunden sind. Dies ermöglicht eine kompakte Anbringung der Ausbringleitungen am Ausleger.

Unter der Längsrichtung des Auslegers wird hier die Richtung verstanden, in der sich der Ausleger erstreckt und in der die Ausbringelemente, z. B. die Spritzdüsen oder Düsenstöcke, entlang des Auslegers beabstandet zueinander angeordnet sind. Die Arbeitsbreite des Spritzgestänges ergibt sich aus der Länge des Spritzgestänges entlang dessen Längsrichtung im ausgeklappten Zustand. Unter der Vertikalrichtung der Ausleger wird die Richtung verstanden, die senkrecht zur Längsrichtung des Auslegers ist und senkrecht zu einer Fahrtrichtung der Feldspritze ist.

Es ist auch möglich, dass dem Mittelteil Spritzdüsen zum Versprühen und/oder Feinverteilen der Spritzflüssigkeit zugeordnet sind. Ebenso ist es möglich, dass dem Mittelteil ergänzend eine oder mehrere erste Mischkammer(n) und/oder Ausbringleitungen wie vorstehend beschrieben, zugeordnet ist/sind, die optional auch am Mittelgestänge angeordnet sein kann/können. Das Mittelteil kann somit ebenfalls einen eigenen Teilabschnitt des Spritzgestänges ausbilden. Alternativ können die Ausbringelemente des Mittelteils oder zumindest eine Teilmenge hiervon einer oder mehreren Mischkammern der Ausleger zugeordnet sein, so dass sich die die Ausbringelemente am Mittelteil versorgenden Ausbringleitungen von einem Verteilerauslass einer ersten Mischkammer oder Fluidverteilers am Ausleger auch bis zum Mittelteil erstrecken.

### Ferner sind folgende weitere Aspekte offenbart:

Das Ausbringelement kann eine Spritzdüse oder ein Düsenträger (auch als Düsenstock bezeichnet) sein, in dem wiederum wenigstens eine Spritzdüse angebracht ist. Die Ausbringelemente können separat ansteuerbar sein, um diese für den Spritzbetreib einzeln ein- und ausschalten zu können. Das Ausbringelement kann hierzu ein Schaltventil oder steuerbare Blende zur Steuerung des Durchflusses umfassen. Die Ausbringelemente können optional mittels Pulsweitenmodulation ansteuerbar und/oder regelbar sein. Die Ausbringelemente sind beabstandet zueinander in Längsrichtung des Spritzgestänges angebracht, beispielsweise in Abständen von beispielsweise 25 cm oder 50 cm.

Das Spritzgestänge kann um eine in Fahrtrichtung verlaufende Schwenkachse (A) bewegbar an einem Trägerfahrzeug mittelbar oder unmittelbar angeordnet sein. Alternativ oder zusätzlich können die zwei seitlichen Ausleger jeweils über eine vertikale Schwenkachse drehbar mit einem Mittelteil des Spritzgestänges verbunden sein.

Jeder Ausleger kann wiederum mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges gefaltet, vorzugsweise mehrfach gefaltet, werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze. Ein Teilabschnitt gemäß der vorstehend beschriebenen Ausführungsform kann einem solchen Gestängeabschnitt oder einer Teilbreite des Auslegers bzw. des Spritzgestänges entsprechen. Aus dem Stand der Technik ist bekannt, dass Ausleger bzw. das Spritzgestänge in Teilbreiten unterteilt sein können, sodass nicht immer mit voller Arbeitsbreite gearbeitet werden muss. Die vorstehend genannten Gestängeabschnitte oder Teilbreiten des Spritzgestänges können jedoch auch jeweils mehrere der vorstehend genannten Teilabschnitte und entsprechend mehrere Mischkammern mit zugeordneten Ausbringelementen aufweisen. Hierdurch kann die Leitungslänge der Ausbringleitungen reduziert werden.

Gemäß einem weiteren Gesichtspunkt betrifft die Erfindung ferner eine landwirtschaftliche Feldspritze, umfassend eine Spritzvorrichtung, wie sie in diesem Dokument beschrieben ist. Die Feldspritze kann eine selbstfahrende oder eine mittels eines Zugfahrzeugs gezogene oder eine an ein Zugfahrzeug angebaute Feldspritze sein. Die selbstfahrende Verteilmaschine kann zudem eine autonom fahrende Landmaschine sein, beispielsweise eine vollautonom oder teilautonom fahrende Landmaschine.

Das Spritzgestänge der Spritzvorrichtung und/oder der Feldspritze weist eine hohe Arbeitsbreite auf, d. h. eine Arbeitsbreite, die wesentlich größer als eine Breite des Trägerfahrzeugs oder der Feldspritze ist, z. B. ein Vielfaches der Breite des Trägerfahrzeugs. Die Feldspritze kann in an sich bekannter Weise eine Stelleinrichtung, z. B. Pneumatik- oder Hydraulikzylinder, umfassen, mittels der eine Stellkraft erzeugbar ist, um das Verteilergestänge um die Schwenkachse zu bewegen. Zur beweglichen Halterung am Trägerfahrzeug kann das Spritzgestänge beispielsweise an einem Träger gelagert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist.

Am Ausleger kann jeweils mindestens ein Abstandssensor zur Messung eines Abstands zum Boden oder Pflanzenbestand angeordnet sein, z. B. in Form eines Ultraschallsensors. Die Feldspritze und/oder das Spritzgestänge kann in an sich bekannter Weise ferner mindestens eine Sensoreinrichtung zur Erfassung einer Drehlage und/oder eine Drehgeschwindigkeit und/oder eine Beschleunigung des Verteilergestänges umfassen, z. b. ein Beschleunigungssensor.

Die zuvor beschriebenen bevorzugten Ausführungsformen- und varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer landwirtschaftlichen Feldspritze mit einem, eine Rahmenkonstruktion aufweisenden Chassis und einer Spritzeinrichtung;
- Figur 2: ein Flüssigkeitsschema einer Spritzvorrichtung einer landwirtschaftlichen Feldspritze gemäß einer Ausführungsform;
- Figur 3: eine schematische Ansicht einer Spritzvorrichtung mit zwei ersten Mischkammern und angeschlossenen Ausbringleitungen gemäß einer weiteren Ausführungsform;
- Figur 4a: eine schematische Ansicht einer ersten Mischkammer mit angeschlossenen Zufuhrleitungen und Ausbringleitungen gemäß einer weiteren Ausführungsform; und
- Figur 4B: eine schematische Ansicht einer Mischkammer und eines Fluidverteilers angeschlossenen Zufuhrleitungen und Ausbringleitungen gemäß einer weiteren Ausführungsform;
- Figur 5: eine schematische Ansicht einer ersten Mischkammer mit angeschlossenen Zufuhrleitungen und Ausbringleitungen mit Verzweigungsstelle gemäß einer weiteren Ausführungsform;
- Figur 6: eine schematische Ansicht einer Zufuhrleitung mit schrittweise kleiner werdendem Innendurchmesser gemäß einer weiteren Ausführungsform;
- Figur 7A: eine perspektivische Ansicht einer Mischkammer der Spritzvorrichtung gemäß einer Ausführungsform der Erfindung;
- Figur 7B: eine Draufsicht im Schnitt der Mischkammer aus Figur 7A;
- Figur 7C: eine Seitenansicht im Schnitt der Mischkammer aus Figur 7A; und
- Figur 8: zeigt die Ausführungsform der Figur 2 mit Signal- und Befehlsübertragungselementen.

Gleiche oder funktional äquivalente Elemente sind in den Figuren zum Teil mit denselben Bezugszeichen bezeichnet und zum Teil nicht gesondert beschrieben.

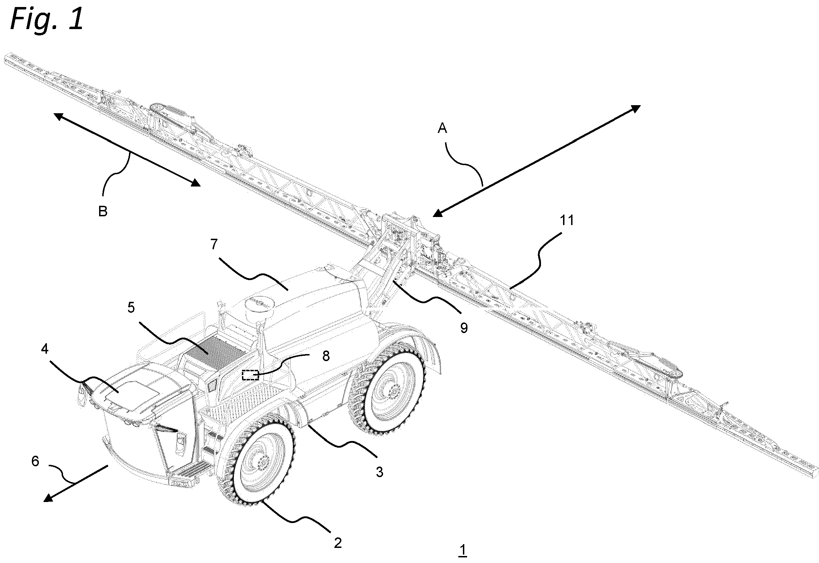

Figur 1 zeigt in einer Perspektivansicht eine Ausführungsvariante einer landwirtschaftlichen Feldspritze 1 mit einem, eine Rahmenkonstruktion aufweisenden Chassis 3, wobei das Chassis 3 zudem ein Fahrwerk 2 aufweist. Die Feldspritze 1 ist hier beispielhaft als eine selbstfahrende Feldspritze ausgeführt und umfasst eine Kabine 4, mit einem Bedienstand für eine Bedienperson und eine Antriebseinrichtung 5 (z.B. Motor). Im hinteren Bereich umfasst die Feldspritze 1 ein sich in einer Arbeitsstellung befindende und sich in großer Arbeitsbreite, z. B. 24 Meter oder mehr, quer zur Fahrtrichtung 6 erstreckendes Spritzgestänge 11, das um eine sich in Fahrtrichtung erstreckende Schwenkachse A mittels einer Stelleinrichtung verschwenkbar ist. Das Spritzgestänge 11, auch als Spritzbalkenanordnung bezeichnet, ist mittels eines höhenverstellbaren Parallelogrammgestänges 9 höhenverstellbar gegenüber dem Chassis 3. Am Chassis 3 ist zudem eine erfindungsgemäße Spritzvorrichtung angebaut, wobei in der Figur 1 hiervon lediglich das Spritzgestänge 11 und ein Vorratstank 7 von mehreren Vorratstanks dargestellt sind. Das Spritzgestänge ist um eine in Fahrtrichtung A weisende Achse schwenkbare und umfasst ein Mittelteil und zwei seitliche Ausleger, die jeweils eine Mehrzahl von Ausbringelementen zum Versprühen und/oder Feinverteilen der Spritzflüssigkeit aufweisen. Ferner ist eine Steuereinrichtung 8 vorgesehen, die in Signalverbindung mit den einzelnen Komponenten der Spritzvorrichtung steht, wie den Ausbringelemente, Pumpen, Ventilen, Durchflussmessern, um diese zur Ausbringung von Spritzflüssigkeit entsprechend zweckmäßig anzusteuern. Die Steuereinrichtung 8 dient insbesondere zur Ansteuerung der unterschiedlichen Dosiersysteme, wie nachfolgend noch detaillierter erläutert ist.

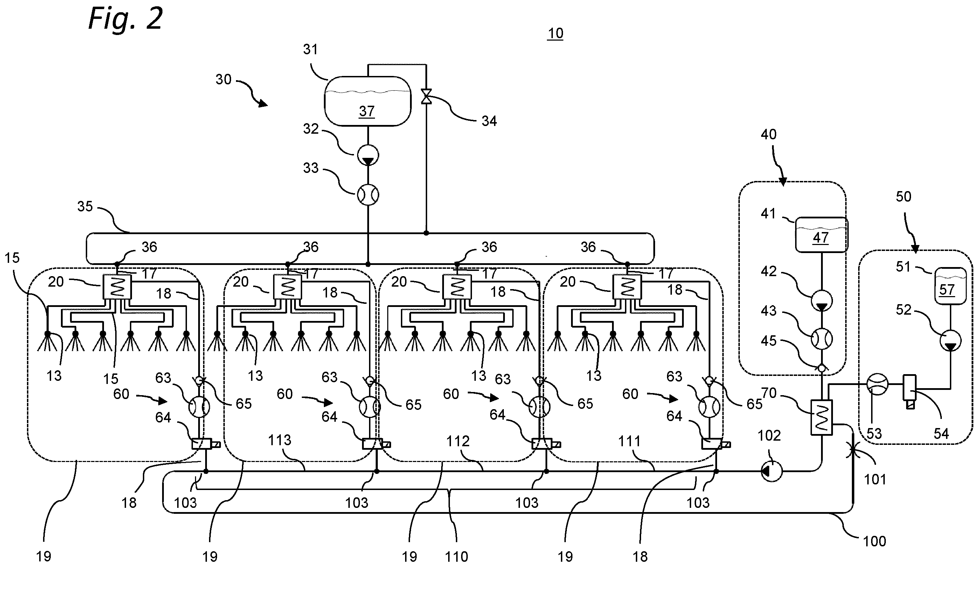

Eine besonders bevorzugte Ausführungsform einer Spritzvorrichtung ist in Figur 2 dargestellt. Die Spritzvorrichtung 10 umfasst mehrere Dosiersysteme, um teilfächenspezifisch und per Direkteinspeisung unterschiedliche Mischungsverhältnisse an Spritzflüssigkeit mit geringer Verzögerung ausbringen zu können. Figur 2 zeigt hierzu ein Flüssigkeitsschema der Ausführungsform. Das Spritzgestänge und die Ausleger sind in dem Flüssigkeitsplan der Figur 2 nicht dargestellt.

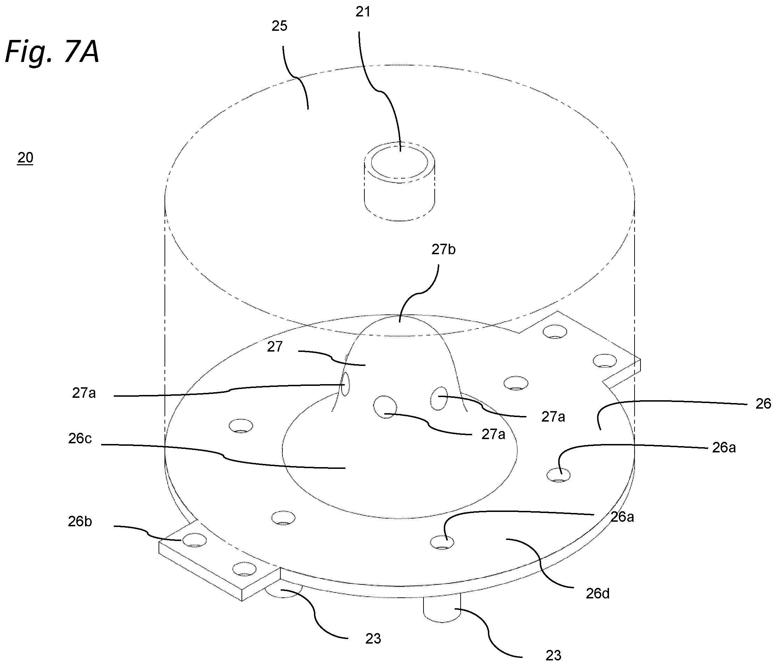

Bei der in Figur 2 gezeigten Spritzvorrichtung 10 ist das Spritzgestänges 11 entlang seiner Längsrichtung B in mehrere Teilabschnitte 19 unterteilt. Hier sind es beispielhaft vier Teilabschnitte 19. Hierbei sind an jedem Teilabschnitt 19 eine Mehrzahl von Ausbringelementen 13 angeordnet und jedes Ausbringelement 13 ist genau einem Teilabschnitt 19 zugeordnet. Hierbei sind an jedem Ausleger zwei Mischkammern 20 mit integrierter Fluidverteilerfunktion angeordnet, nachfolgend auch als erste Mischkammern bezeichnet. Eine beispielhafte Ausführung einer solchen ersten Mischkammer ist in den Figuren 7a-c beschrieben. Die von diesen ersten Mischkammern 20 vermischte Spritzflüssigkeit wird jeweils in Form mehrerer hydraulisch paralleler Teilströme über die Verteilerauslässe der ersten Mischkammern 20, an die die Ausbringleitungen 15 zur Versorgung der Ausbringelemente 13 angeschlossen sind, ausgeleitet. Das Ausbringelement 13 kann eine Spritzdüse oder ein Düsenträger sein, in dem wiederum wenigstens eine Spritzdüse angebracht ist.

Wie erwähnt, umfasst die Spritzvorrichtung 10 mehrere Dosiersysteme, um eine flexible Direkteinspeisung mit teilflächenspezifischer Applikation zu ermöglichen.

Die Spritzvorrichtung 10 umfasst ein erstes Dosiersystem 30, mit einem ersten Vorratsbehälter 31 für eine erste Spritzflüssigkeit 37 und einer ersten Dosiereinrichtung 32, 33. Der erste Vorratsbehälter kann z. B. der Tank 7 aus Figur 1 sein. Bei dem ersten Vorratsbehälter 31 handelt es sich um den Haupttank für eine erste vorgemischte Spritzflüssigkeit, z. B. eine Hauptmischung an Spritzflüssigkeit. Das ist diejenige Mischung, die zum Großteil bei einem bevorstehenden Spritzvorgang ausgebracht werden soll. An dem ersten Vorratsbehälter kann ferner ein Anschluss für bzw. eine Kopplung mit beispielsweise einer Einspülschleuse vorgesehen sein (nicht dargestellt), um den Haupttank entsprechend befüllen zu können.

Die erste Dosiereinrichtung umfasst hier einen Durchflussmesser 33 und eine Druckerzeugungseinheit, hier z. B. eine Pumpe 32, zur Förderung der ersten Spritzflüssigkeit 37. Alternativ zur Pumpe 32 wäre es auch denkbar, dass der Förderdruck mittels eines Kompressors erzeugt wird, welcher bspw. wirkungstechnisch mit dem ersten Vorratsbehälter 31 verbunden ist.

Die ersten Mischkammern 20 sind eingangsseitig jeweils über die Leitungen 17 an eine erste Zufuhrleitung 35 fluidisch angeschlossen, der die erste Spritzflüssigkeit 37 mittels der ersten Dosiereinrichtung 32, 33 aus dem ersten Vorratsbehälter 31 zuführbar ist. Die erste Zufuhrleitung 35 ist hier als Ringleitung bzw. Zirkulationsleitung ausgeführt, die einen sich in Längsrichtung des Spritzgestänges 11 erstreckenden und entlang des Spritzgestänges 11 geführten Abschnitt aufweist, an dem korrespondierend zu den ersten Mischkammern 20 mehrere Abzweigstellen 36 vorgesehen sind. Eine Ausführung als Stichleitung wäre auch möglich. An einer Abzweigstelle 36 wird für jeweils eine der ersten Mischkammern 20 Spritzflüssigkeit 37 mittels der Leitungen 17 abgezweigt. In der ersten Zufuhrleitung 35 ist ein Zirkulationsventil 34 angeordnet. Dieses wird von der Steuereinrichtung 8 so angesteuert, dass es geschlossen ist, wenn die Spritzdüsen 13 geöffnet sind, um einen ausreichenden Spritzdruck zu erzeugen, und es geöffnet ist, wenn die Spritzdüsen 13 geschlossen sind, um somit beispielsweise Ablagerungen im System zu verhindern.

Die Spritzvorrichtung 10 umfasst ferner ein zweites Dosier- oder Versorgungssystem 40, umfassend einen zweiten Vorratsbehälter 41 für eine zweite Spritzflüssigkeit 47 und eine zweite Dosier- oder Fluidversorgungseinrichtung 42, 43. Bei der zweiten Spritzflüssigkeit 47 handelt es sich hier beispielsweise um Frischwasser (Klarwasser) und der zweite Vorratsbehälter 41 ist ein Wassertank, wobei auch eine andere Trägerflüssigkeit für einen Wirkstoff verwendet werden kann.

Die zweite Dosier- oder Fluidversorgungseinrichtung umfasst einen Durchflussmesser 43 und eine Druckerzeugungseinheit, vorzugsweise in Form einer Pumpe 42 (Ladepumpe zur Flüssigkeitsförderung). Die Pumpe 42 könnte auch ersetzt werden, indem der Vorratsbehälter 41 gezielt mit Überdruck beaufschlagt wird, z. B. mithilfe eines Kompressors. Stromab der Pumpe 42 ist ein Rückschlagventil 45 angeordnet, was dazu dient, ein ungewolltes Vermischen des Frischwassers mit Pflanzenschutzmittel des nachfolgend beschriebenen dritten Dosiersystems 50 zu verhindern. Dieses zweite Dosier- oder Versorgungssystem 40 dient nicht zwingend dazu, um eine exakte bzw. wohl dosierte Menge an Spritzflüssigkeit bereitzustellen, sondern erzeugt im Wesentlichen nur Druck zur Bereitstellung von Frischwasser 47. Eine exakte Mengenregelung wie in dem ersten oder dritten Dosiersystems 30, 50 ist hier nicht vorgesehen, wäre jedoch möglich. Ein Dosierventil ist entsprechend nicht vorgesehen, wäre aber zur Erhöhung der Dosiergenauigkeit möglich.

Die Spritzvorrichtung 10 umfasst ferner ein drittes Dosiersystem 50, umfassend mindestens eine dritte Dosiereinrichtung 52, 53, 54 und mindestens einen dritten Vorratsbehälter 51 und/oder mindestens eine Behälteraufnahme zur lösbaren Halterung eines dritten Vorratsbehälters 51. Die dritte Spritzflüssigkeit ist hier ein Pflanzenschutzmittel, beispielsweise ein Wachstumsregler, Fungizid, Insektizid, Pestizid und/oder dergl. Der dritte Vorratsbehälter kann ein Kanister sein. Das dritte Dosiersystem 50 kann eine Behälteraufnahme umfassen, die an der Feldspritze vorgesehen ist, um den Kanister als Wechselbehälter lösbar zu haltern. Die dritte Dosiereinrichtung umfasst ein Dosierventil 54, einen Durchflussmesser 53 und eine Druckerzeugungseinheit, vorzugsweise wieder ausgebildet als eine Pumpe 52. Es können mehrere derartige dritte Vorratsbehälter bzw. Behälteraufnahmen und mehrere zugeordnete dritte Dosiereinrichtungen vorgesehen sein, je nachdem wie viele unterschiedliche dritte Spritzflüssigkeiten, beispielsweise wie viele unterschiedliche Pflanzenschutzmittel, per Direkteinspeisung ausgebracht werden sollen.

Die Spritzvorrichtung des Ausführungsbeispiels der Figur 2 umfasst ferner eine weitere Mischkammer 70, hier als Hauptmischkammer bezeichnet. Der Hauptmischkammer 70 ist zweite Spritzflüssigkeit 47 durch die zweite Dosier- oder Fluidversorgungseinrichtung 42, 43 über eine Zufuhrleitung des zweiten Dosiersystems 40 und die mindestens eine dritte Spritzflüssigkeit 57 durch die mindestens eine dritte Dosiereinrichtung 52, 53, 54 über eine oder mehrere entsprechende Zufuhrleitung des dritten Dosiersystems 50 eingangsseitig zuführbar. Ausgangsseitig ist die Hauptmischkammer 70 an eine zweite Zufuhrleitung 100 angeschlossen, um die durch die Hauptmischkammer 70 erzeugte Spritzflüssigkeitsmischung den ersten Mischkammern 20, insbesondere deren zweiten Einlässen, zuzuleiten. In dem vorliegenden Beispiel ist die zweite Zufuhrleitung 100 als Zirkulationsleitung bzw. Ringleitung ausgeführt, in der ferner eine Pumpe (Förderpumpe) 102 und ein Drosselventil 101 angeordnet ist. Die Hauptmischkammer 70 ist ausgebildet, die ihr über das aus dem zweiten Dosier- oder Versorgungssystem 40 und dem dritten Dosiersystem 50 zugeführten zweiten und dritten Spritzflüssigkeiten 47, 57 zu vermischen, vorzugsweise homogen zu vermischen, und anschließend die vermischte Spritzflüssigkeit in die zweite Zirkulationsleitung (Ringleitung) 100 auszuleiten.

Die zweite Zirkulationsleitung (Ringleitung) 100 umfasst einen sich in Längsrichtung des Spritzgestänges 11 erstreckenden und entlang des Spritzgestänges 11 geführten Abschnitt 110, der mehrere Abzweigstellen 103 für Abzweige 18 zur Versorgung jeweils eines Teilabschnitts 19 und Teils der Ausbringelemente 13 mit Spritzflüssigkeit aufweist. Diese Abzweige 18 sind somit Leitungen, die jeweils eine Abzweigstelle 103 der zweiten Zirkulationsleitung 100 mit dem zweiten Einlass einer der ersten Mischkammern 20 fluidisch verbinden.

Die ersten Mischkammern 20 sind somit eingangsseitig einerseits über ihren ersten Einlass an die erste Zirkulationsleitung 35 fluidisch angeschlossen und andererseits über ihren zweiten Einlass jeweils an einen der Abzweige 18 der zweiten Zirkulationsleitung 100 fluidisch angeschlossen.

Die aus der Hauptmischkammer 70 in die zweite Zirkulationsleitung 100 einfließende Spritzflüssigkeit wird mittels der Pumpe 102 in Richtung der Abzweigstellen 103 gefördert. Der Anteil der Spritzflüssigkeit, der nicht über die Abzweige 18 den ersten Mischkammern 20 zugeleitet wurde, strömt im Zirkulationsbetrieb über die zweite Zirkulationsleitung 100 zurück in Richtung Drosselventil 101 und kann bei aktivierter Pumpe 102 über die Hauptmischkammer 70 weiter in der zweiten Zirkulationsleitung 100 zirkulieren. Die Spritzflüssigkeit wird somit in der zweiten Ringleitung 100 zirkuliert, um somit die richtige / gewünschte Flüssigkeit, d.h. die Flüssigkeit mit der richtigen / gewünschten Konzentration möglichst schnell, d.h. ohne Verzögerungszeit an der erforderlichen Position des Spritzgestänges zur Verfügung zu haben.

Die Spritzvorrichtung 10 weist ferner jeweils in den Abzweigen 18 angeordnete vierte Dosiereinrichtungen 60 auf, umfassend jeweils einen Durchflussmesser 63 und ein Dosierventil 64. Diese vierten Dosiereinrichtungen 60 dienen zum Steuern und/oder Regeln einer der jeweiligen zugeordneten ersten Mischkammern 20 aus der zweiten Zufuhrleitung 100 zugeführten Menge an zweiter und/oder dritter Spritzflüssigkeit, die zuvor in der Hauptmischkammer 70 vermischt wurden. Hierzu steht die Steuereinrichtung 8 in Signalverbindung mit den Durchflussmessern 63 und den Dosierventilen 64 und steuert letztere entsprechend an. Das Drosselventil 101 ist stromab zu den Abzweigstellen 103 angeordnet, bevor die zweite Zufuhrleitung 100 wieder in die Hauptmischkammer 70 mündet. Die vierten Dosiereinrichtungen 60 dienen dazu, bei Bedarf Durchflussdifferenzen zwischen einzelnen Abzweigen 18 auszugleichen und/oder den jeweiligen ersten Mischkammern 20 nur die jeweils für die teilflächenspezifische Applikation erforderliche Menge an zweiter und/oder dritter Spritzflüssigkeit 47, 57 zuzuführen.

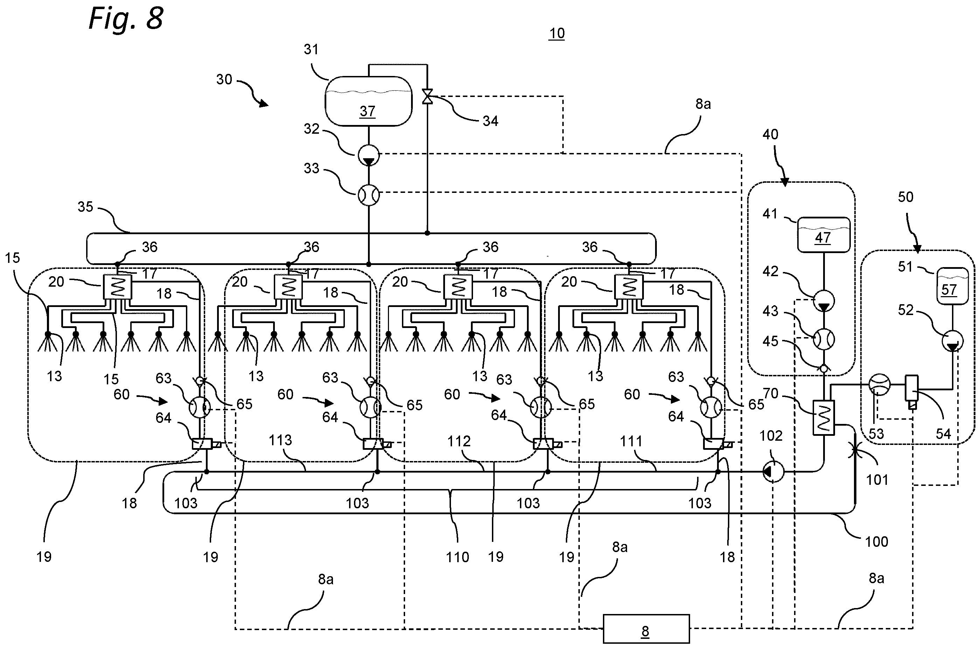

Zur Realisierung einer teilflächenspezifischen Applikation von Spritzflüssigkeit ist die Steuereinrichtung 8 ausgebildet, wahlweise allen Ausbringelementen 13 oder Ausbringelementen 13 ausgewählter Teilabschnitte 19 durch Ansteuerung der ersten Dosiereinrichtung 32, 33, der zweiten Dosier- oder Fluidversorgungseinrichtung 42, 43 und der mindestens einen dritten Dosiereinrichtung 52, 53, 54 und der vierten Dosiereinrichtungen 60, wahlweise eine Mischung aus zumindest zwei der Spritzflüssigkeiten 37, 47, 57 in einem festlegbaren Mischungsverhältnis oder nur eine der Spritzflüssigkeit zuzuführen. Dies wird nachfolgend in Zusammenhang mit Figur 8 noch detaillierter erläutert.

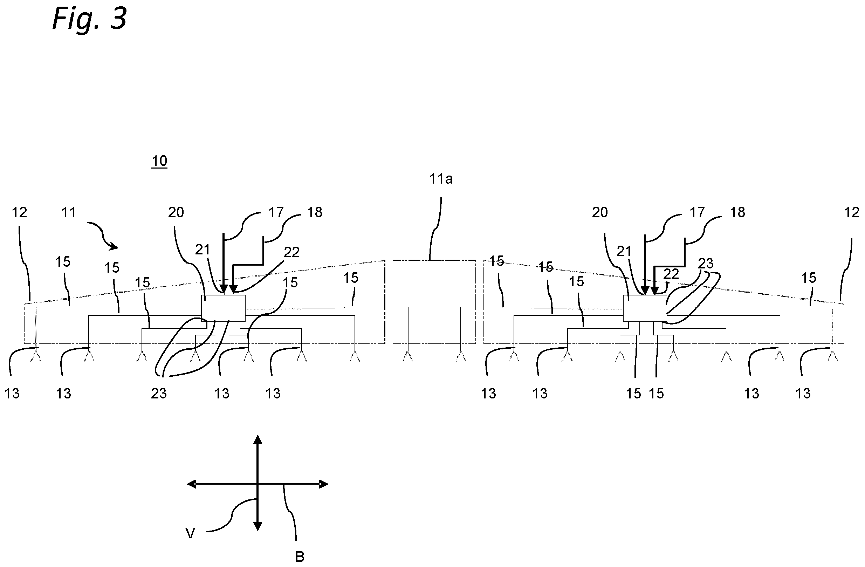

Figur 3 zeigt eine schematische Ansicht einer Spritzvorrichtung 10 mit zwei ersten Mischkammern 20 und angeschlossenen Ausbringleitungen 10 gemäß einer Ausführungsform.

Die Spritzvorrichtung 10 dient zum dosierten Ausbringen von Spritzflüssigkeit auf landwirtschaftlichen Nutzflächen. Die in Figur 3 dargestellte Spritzvorrichtung 10 ist für eine Feldspritze ausgeführt, die eine kleinere Arbeitsbreite aufweist als die in Figur 1 gezeigte Feldspritze 1. Die Spritzvorrichtung 10 umfasst das schwenkbare Spritzgestänge 11, welches zwei seitliche Ausleger 12 aufweist, die jeweils eine Mehrzahl von Ausbringelementen 13 zum Versprühen und/oder Feinverteilen der Spritzflüssigkeit aufweisen. Die Ausbringelemente 13 erzeugen einen zum Boden bzw. zum Pflanzenbestand hin ausgerichteten Sprühkegel zum gewünschten Verteilen des Wirkstoffes. Die Ausbringelemente 13 sind in Figur 3 nur schematisch anhand des von ihnen erzeugten Sprühkegels (könnte auch sog. Spritzfächer sein) dargestellt. Die Längsrichtung des Spritzgestänges 11 bzw. der Ausleger 12 ist durch den Pfeil B gekennzeichnet, die Vertikalrichtung des Spritzgestänges 11 bzw. der Ausleger 12 durch den Pfeil V. Die zwei seitlichen Ausleger 12 sind jeweils über eine in Fahrtrichtung verlaufende Schwenkachse A drehbar mit einem Mittelteil 11a des Spritzgestänges 11 verbunden.

An jedem Ausleger 12 ist eine erste Mischkammer 20 mit integrierter Fluidverteilerfunktion angeordnet. Die ersten Mischkammern 20 umfassen jeweils einen ersten Einlass 21 zum Einlassen eines ersten Flüssigkeitsstroms, einen zweiten Einlass 22 zum Einlassen eines zweiten Flüssigkeitsstroms und mehrere Auslässe (Verteilerauslässe) 23 zum Auslassen des vermischten Flüssigkeitsstroms als mehrere Teilströme 23a. Die Mischkammer und der Fluidverteiler sind hier als bauliche Einheit ausgeführt. Die ersten Mischkammern 20 können denen der Ausführungsvariante aus Figur 2 entsprechend, wobei anstatt vier nur zwei solche ersten Mischkammern 20 vorgesehen sind. Den Mischkammern 20 werden über Zufuhrleitungen 17, 18 die beiden zu vermischenden Spritzflüssigkeiten zugeleitet. Die Zufuhrleitungen sind somit an die Einlässe 21, 22 angeschlossen. An die zuvor beschriebenen Auslässe (Verteilerauslässe) 23 sind jeweils Ausbringleitungen 15 angeschlossen. Der Aufbau der Spritzvorrichtung bzw. der Flüssigkeitsplan stromauf zu den ersten Mischkammern 20 kann dem aus Figur 2 entsprechen und ist daher hier bis auf die Zufuhrleitungen 17, 18 nicht näher dargestellt, um den Aspekt der einzelnen Ausbringleitungen 15 zu verdeutlichen.

Die gezeigten ersten Mischkammern 20 mit integrierter Fluidverteilerfunktion sind zum Vermischen zweier Spritzflüssigkeiten und zum Verteilen bzw. Aufteilen der vermischten Spritzflüssigkeiten auf mehrere Teilströme ausgebildet, die über die Verteilerauslässe 23 als hydraulisch parallele Teilströme ausgeleitet werden. Die ersten Mischkammern 20 haben somit jeweils zwei Funktionen, nämlich das Vermischen von zugeführten Spritzflüssigkeiten und das anschließende Verteilen, was auch als Aufteilen oder Verzweigen bezeichnet werden kann, der vermischten Spritzflüssigkeit auf mehrere Teilströme.

Hierbei ist jedes der Ausbringelemente 13 über eine separate Ausbringleitung 15 mit einem der Verteilerauslässe 23 fluidisch verbunden. Der besseren Übersichtlichkeit wegen ist nicht jedes Ausbringelement 13, nicht jede Ausbringleitung 15 und nicht jeder Verteilerauslass 23 gesondert mit einem Bezugszeichen gekennzeichnet. In dem gezeigten Beispiel sind jedoch insgesamt 16 in Längsrichtung B des Spritzgestänges 11 gleichmäßig beabstandet angeordnete Ausbringelemente 13 dargestellt, denen jeweils über eine eigene Ausbringleitung 15 Spritzflüssigkeit zugeführt wird. Entsprechend weist jede erste Mischkammer 20 in diesem Beispiel acht Verteilerauslässe 23 auf und an jede erste Mischkammer 20 sind entsprechend acht Ausbringleitungen 15 angeschlossen. Die Anzahl an ersten Mischkammern 20, Verteilerauslässen 23, Ausbringelementen 13 und Ausbringleitungen 15 sind hier nur beispielhaft. Bei Spritzgestängen mit größeren Arbeitsbreiten können entsprechend mehrere erste Mischkammern 20 pro Ausleger und eine höhere Anzahl von Ausbringelementen 13 und Ausbringleitungen 15 vorgesehen sein und/oder die Anzahl von Verteilerauslässen 23 pro erster Mischkammer variiert werden.

Die erste Mischkammer 20 vermischt zwei dieser zugeführten Spritzflüssigkeitsströme und verzweigt den im Mischkammerinneren entstehenden vermischten Spritzflüssigkeitsstrom in Teilströme und gibt diese über die Verteilerauslässe 23 aus. Diese Teilströme werden dann über die Ausbringleitungen 15 auf getrennten Teilströmungswegen von der ersten Mischkammer 20 zu den jeweiligen Ausbringelementen 13 gefördert. Das Vorsehen separater Ausbringleitungen 15 anstatt einer herkömmlichen Düsenleitung, die mehrere Ausbringelemente nacheinander speist, bietet den Vorzug, dass diese Ausbringleitungen 15 mit kleinerem Durchmesser ausgeführt werden können, da diese nur eine Teilmenge der Spritzflüssigkeit, nämlich nur die Spritzflüssigkeit, die über ein einzelnes Ausbringelement 13 ausgebracht wird, fördern müssen. Entsprechend schneller ist die Strömungsgeschwindigkeit in den einzelnen Ausbringleitungen 15 im Vergleich zu einem Düsenrohr, so dass insgesamt eine schnellere Reaktionszeit erzielt werden kann.

Diese Ausbringleitungen 15 sind hier als Schlauchleitungen und/oder als flexible Leitungen ausgeführt, die einen nicht-geraden (gekrümmten) Verlauf aufweisen. Die Ausbringleitungen sind so dimensioniert, dass es auf dem Weg vom Verteilerauslass 23 zum jeweiligen Ausbringelement 13 zu einem Druckabfall von jeweils maximal 1 bar kommt und ein Zeitverzug der Teilströme für ihren Strömungsweg von der ersten Mischkammer 20 bis zum Erreichen der jeweiligen Ausbringelemente 13 jeweils maximal fünf Sekunden ist. Die ersten Mischkammern 20 sind hier mittig in Längsrichtung B jeweils eines der Ausleger 12 angeordnet.

Vorstehend wurde bereits angemerkt, dass in Figur 3 ein Spritzgestänge 11 mit kleiner Arbeitsbreite dargestellt ist. In einer weiteren Ausführungsform (nicht dargestellt), die für größere Arbeitsbreiten, wie z. B. für das in Figur 1 gezeigte Spritzgestänge 11 vorteilhaft ist, ist jeder Ausleger in mehrere Teilabschnitte unterteilt, wobei an jedem Teilabschnitt eine Mehrzahl von Ausbringelementen angeordnet ist und jedes Ausbringelement genau einem Teilabschnitt zugeordnet ist. In dieser Ausführungsform weist jeder Ausleger mehrere ersten Mischkammern 20 auf, derart, dass an jedem Teilabschnitt eine erste Mischkammer 20 angeordnet ist und die dem jeweiligen Teilabschnitt zugeordneten Ausbringelemente mit der ersten Mischkammer 20 dieses Teilabschnitts über entsprechende Ausbringleitungen verbunden sind. Figur 2 zeigt ein entsprechendes Beispiel mit zwei ersten Mischkammern 20 pro Ausleger. So kann jeder der Ausleger 12 zwei, drei, vier oder mehr erste Mischkammern 20 aufweisen, die in Längsrichtung B des Auslegers 12 beabstandet voneinander längs des Auslegers an diesem angeordnet sind. Entsprechend ist eine Gruppe von Ausbringelementen, die einem bestimmten Teilabschnitt und ersten Mischkammer 20 zugeordnet sind, in Längsrichtung benachbart zu einer weiteren Gruppe von Ausbringelementen angeordnet, die einem benachbarten Teilabschnitt und einer benachbarten ersten Mischkammer zugeordnet sind.

Hierzu kann jeder Ausleger 12 mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges mehrfach gefaltet werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze.

Die vorgenannte Unterteilung in Teilabschnitte kann dieser Unterteilung in relativ zueinander beweglichen Gestängeabschnitten entsprechen. Alternativ kann jeder dieser Gestängeabschnitte mehrere, also mindestens zwei, Teilabschnitte aufweisen, so dass in dem Gestängeabschnitt mindestens zwei ersten Mischkammern mit zugeordneten Ausbringelementen angeordnet sind. Hierdurch kann die Leitungslänge der Ausbringleitungen reduziert werden. Auch die am Mitteilteil angeordneten Ausbringelemente 13 können einem Teilabschnitt entsprechen oder, wie in Figur 3 gezeigt, Teilabschnitten zugeordnet sein.

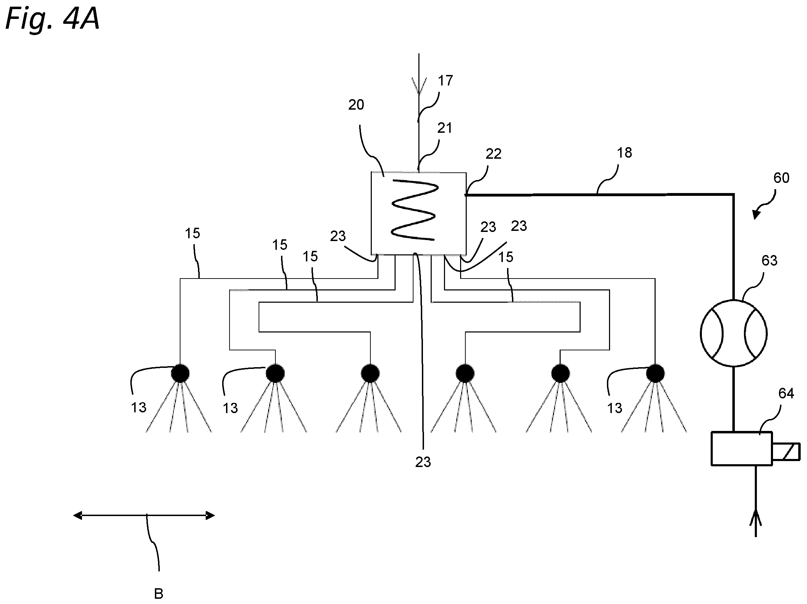

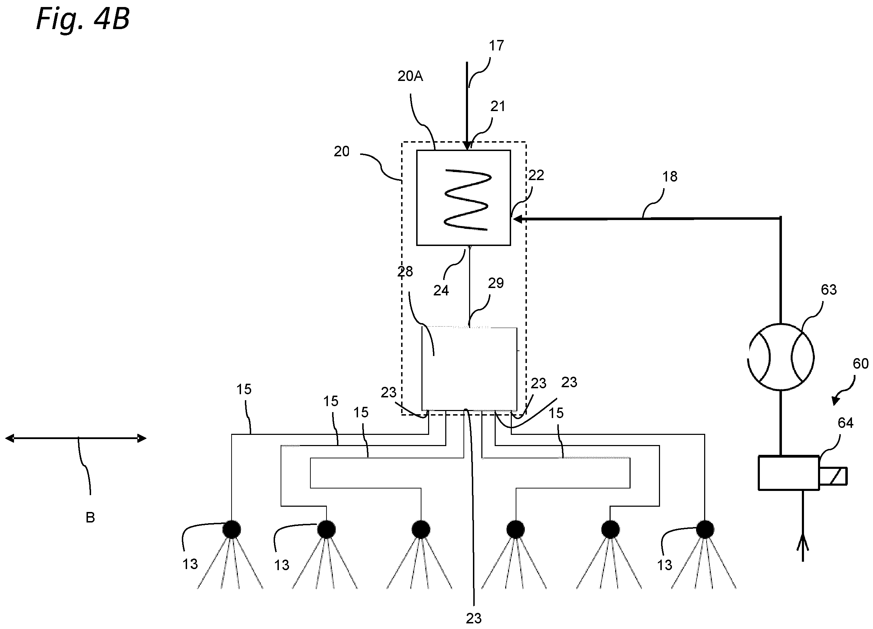

Es ist besonders vorteilhaft, die Ausbringleitungen 15 so auszuführen, dass sie gleich lang sind, so dass der Strömungsweg vom Verteilerauslass 23 bis zum jeweiligen Ausbringelement 13 für alle Ausbringleitungen 15 gleich lang ist. Differenzen im Zeitverzug, bis Spritzflüssigkeit den Strömungsweg vom Verteilerauslass bis zu den Ausbringelementen zurückgelegt hat, können so vermieden werden. Eine solche Ausführungsform mit gleich langen Ausbringleitungen ist in den Figuren 2, 4A und 4B gezeigt.

Figur 4A zeigt eine schematische Ansicht einer ersten Mischkammer mit angeschlossenen Zufuhrleitungen und Ausbringleitungen gemäß einer weiteren Ausführungsform.

In Figur 4A ist ebenfalls eine Ausführungsform gezeigt, bei der die Ausbringleitungen 15 die gleiche Länge und den gleichen Durchmesser aufweisen, so dass der Strömungsweg vom Verteilerauslass 23 bis zum jeweiligen Ausbringelement 13 für alle Ausbringleitungen 15 gleich lang ist. Differenzen im Zeitverzug, bis Spritzflüssigkeit den Strömungsweg vom Verteilerauslass bis zu den Ausbringelementen zurückgelegt hat, können so vermieden werden. Zur Verdeutlichung dieses Aspekts ist nur eine einzige erste Mischkammer 20 mit zugeordneten Ausbringleitungen 15 und Ausbringelementen 13 dargestellt, sowie mit einer Dosiereinrichtung 60 für eine der Zufuhrleitungen. Die anderen (nicht dargestellten) ersten Mischkammern 20 und Elemente der Spritzvorrichtung 10 und des Spritzgestänges 11 können wie zuvor beschrieben ausgeführt sein.

Am ersten Einlass 21 der ersten Mischkammer 20 ist wiederum eine erste Zufuhrleitung 17 angeschlossen, um der ersten Mischkammer 20 eine erste Spritzflüssigkeit, z. B. eine Hauptmischung aus einem Haupttank der Feldspritze, zuzuführen. Am zweiten Einlass 22 der ersten Mischkammer 20 ist eine zweite Zufuhrleitung 18 angeschlossen, um der ersten Mischkammer 20 eine zweite Spritzflüssigkeit, z. B. ein vorverdünntes Pflanzenschutzmittel aus einem weiteren Vorratsbehälter, z. B. einem Kanister, zuzuführen. Ferner ist eine Dosiereinrichtung 60, umfassend einen Durchflussmesser 63 sowie ein Dosierventil 64 gezeigt, um die in die erste Mischkammer 20 eingebrachte Menge der zweiten Spritzflüssigkeit je nach Bedarf dosieren zu können. Um eine teilflächenspezifische Applikation zu ermöglichen, kann das Dosiersystem 60 beispielsweise bei Bedarf so von der Steuereinrichtung 8 angesteuert werden, dass der ersten Mischkammer 20 z. B. zusätzlich zum über die Leitung 17 zugeleiteten Hauptgemisch ein Pflanzenschutzmittel über die Leitung 18 zudosiert und mit dem Hauptgemisch in der ersten Mischkammer 20 vermischt wird. Das Pflanzenschutzmittel kann z. B. selektiv nur einer der ersten Mischkammern 20 oder einer Teilmenge der ersten Mischkammern 20 des Spritzgestänges zugeführt werden, so dass nur über diejenigen Ausbringelemente 13, die stromab zu dieser einen ersten Mischkammer 20 oder dieser Teilmenge von ersten Mischkammern 20 angeordnet sind, das Pflanzenschutzmittel zur teilfächenspezifischen Applikation ausgebracht wird.

In dem gezeigten Beispiel sind der ersten Mischkammer 20 lediglich beispielhaft sechs Ausbringelemente 13 zugeordnet und über entsprechende Ausbringleitungen 15 an der ersten Mischkammer 20 angeschlossen. Obwohl die räumlichen Abstände der einzelnen Ausbringelemente 13 zum Verteilerauslass 23 der ersten Mischkammer 20, über die sie gespeist werden, zum Teil stark unterschiedlich sind, sind alle sechs Ausbringleitungen 15 gleich lang und weisen denselben Durchmesser auf. Folglich weisen alle Ausbringleitungen 15 den gleichen Druckabfall und den gleichen Zeitverzug auf, bis Spritzflüssigkeit die Ausbringelemente 13 erreicht. Entsprechend kann eine besonders gleichmäßige Ausbringung von Spritzflüssigkeit erzielt werden. Die anderen ersten Mischkammern 20 (nicht dargestellt) der Spritzvorrichtung können identisch aufgebaut sein. Hierbei können die Ausbringleitungen 15 aller ersten Mischkammern 20 die gleiche Länge aufweisen.

Vorstehend wurde bereits festgestellt, dass alternativ hierzu auch die Möglichkeit besteht, dass z. B. zwar alle Ausbringleitungen einer ersten Mischkammer 20 die gleiche Länge aufweisen, jedoch Ausbringleitungen unterschiedlicher Mischkammern unterschiedlich lang sein können. Hierbei können die sich hieraus ergebenen unterschiedlichen Durchflusszeiten durch die Ausbringleitungen unterschiedlicher erster Mischkammern 20 durch die Steuereinrichtung 8 entsprechend bei der zeitlichen Ansteuerung der Ausbringelemente 13 berücksichtigt werden. Beispielsweise können in der Steuereinrichtung 8, z. B. ein zentrales Steuergerät zum Steuern des Spritzvorgangs, welches zur Steuerung der Ausbringelemente 13 mit diesen in Signalverbindung steht, Offset-Werte hinterlegt sein, die ein Maß für die unterschiedlichen Durchflusszeiten je erster Mischkammer angeben. Entsprechend können unter Verwendung derartiger Offset-Werte die Schaltzeiten für die Ausbringelemente exakt eingehalten werden, wenn einzelne Teilabschnitte des Auslegers einzeln angesteuert werden, so dass trotz teilweiser unterschiedlicher Länge der Ausbringleitungen die Spritzflüssigkeit im Wesentlichen zum gleichen Zeitpunkt aus den Ausbringleitungen austritt.

Figur 4B zeigt eine schematische Ansicht einer Mischkammer und eines Fluidverteilers mit angeschlossenen Zufuhrleitungen und Ausbringleitungen gemäß einer weiteren Ausführungsform. Die Besonderheit dieser Ausführungsform liegt darin, dass anstatt einer Mischkammer mit integrierter Fluidverteilerfunktion diese Funktion durch zwei separate Bauteile 20A, 28 realisiert wird, die zusammen eine Einrichtung 20 zum Vermischen mindestens zweier Spritzflüssigkeiten und zum Verteilen der vermischten Spritzflüssigkeiten auf mehrere Teilströme ausbilden. Hierzu ist eine erste Mischkammer 20A, die nur einen Auslass 24, aufweist, sowie ein Fluidverteiler 28 stromab zu der ersten Mischkammer 20A als separate Komponente angeordnet. Hierbei wird dem Einlass 29 des Fluidverteilers 28 aus einem Auslass 24 der ersten Mischkammer 20A austretende Spritzflüssigkeit zugeführt. An den Verteilerauslässen 23 des Fluidverteilers 28 sind dann wieder die Ausbringleitungen 15, wie in Zusammenhang mit Figur 4A bereits beschrieben wurde, angeschlossen. Auch in der Ausführungsvariante der Figur 2 können anstelle der ersten Mischkammern mit integrierter Fluidverteilerfunktion stattdessen zwei separate Komponenten vorgesehen werden, die die gleiche Funktionalität ausbilden.

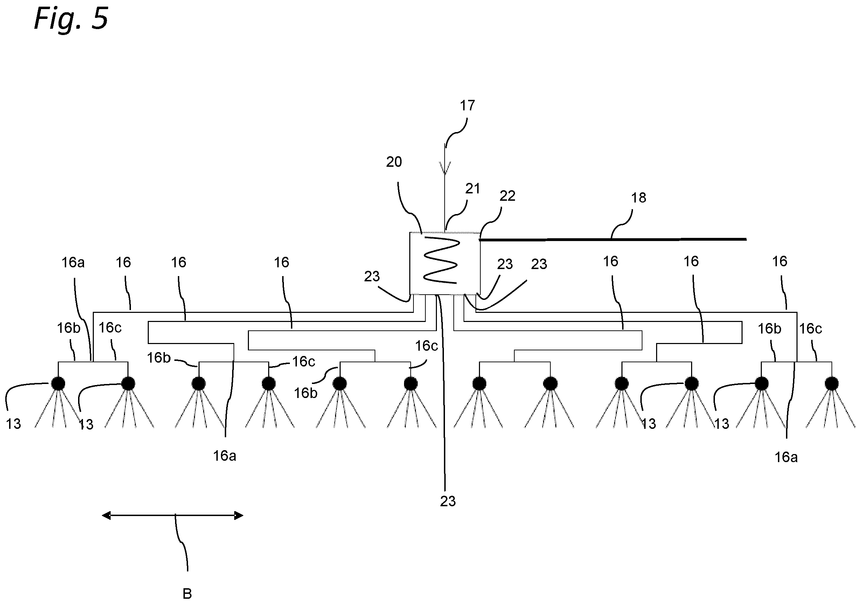

Figur 5 zeigt eine schematische Ansicht einer ersten Mischkammer 20 mit angeschlossenen Ausbringleitungen gemäß einer weiteren Ausführungsform. Die Besonderheit dieser Ausführungsform liegt darin, dass die Ausbringelemente 13 jeweils nicht über separate Ausbringleitungen angeschlossen sind, sondern dass die Ausbringleitungen 16 jeweils eine Verzweigungsstelle 16a aufweisen. Zur Verdeutlichung dieses Aspekts ist in Figur 5 wiederum nur eine der ersten Mischkammern 20 mit zugeordneten Ausbringleitungen 16 und Ausbringelementen 13 dargestellt. Der besseren Übersichtlichkeit ist wiederum nur ein Teil der Komponenten mit Bezugszeichen gekennzeichnet.

Wie in Figur 5 erkennbar ist, weisen alle Ausbringleitungen 16 der ersten Mischkammer 20 jeweils eine Verzweigungsstelle 16a auf. Jede der Verzweigungsstellen 16a stellt zwei Leitungszweige 16b, 16c bereit. Die Verzweigungsstelle 16a ist nach Art einer Y-Verzweigung bzw. T-Verzweigung ausgebildet, so dass jeder Leitungszweig 16b, 16c an seinem freien Ende an ein Ausbringelement 13 angeschlossen ist. Der vom Verteilerauslass 23 kommende Teilstrom teilt sich somit an der Verzweigungsstelle 16a nochmals in zwei weitere Teilströme auf. Auch hier sind wieder alle Ausbringleitungen 16 der ersten Mischkammer 20 identisch ausgeführt, so dass der Zeitverzug, bis Spritzflüssigkeit von einem Verteilerauslass 23 das jeweilige Ausbringelement 13 erreicht, gleich ist. Die anderen ersten Mischkammern 20 oder eine Teilmenge hiervon können identisch aufgebaut sein.

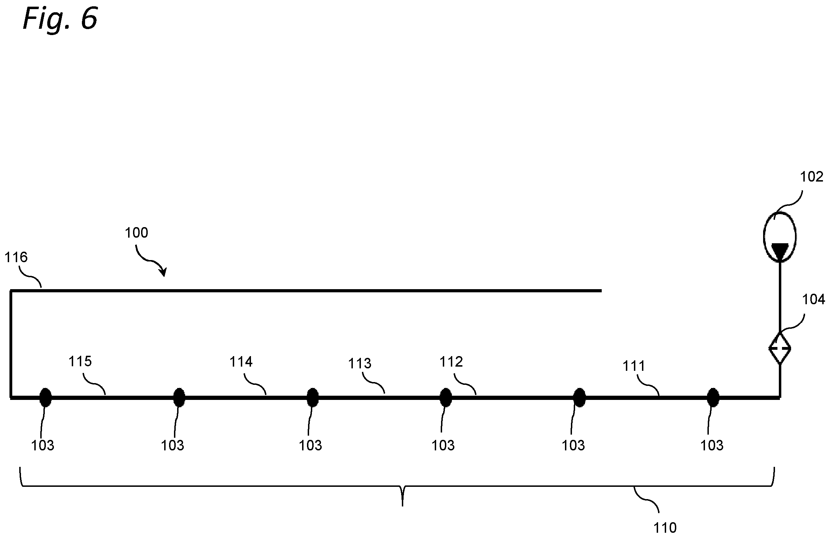

Die Figur 6 zeigt eine schematische Ansicht einer möglichen Ausführungsvariante der Ringleitung 100, wie sie vorteilhaft in der Ausführungsform gemäß Figur 2 verwendet werden kann, wobei im Unterschied zur Ausführungsform der Figur 2 hier noch ein optionales Filterelement 104 stromab zur Pumpe 102 eingezeichnet ist. Vorstehend wurde bei der Beschreibung der Ausführungsform gemäß Figur 2 bereits festgestellt, dass die Zufuhrleitung 100 einen sich in Längsrichtung des Spritzgestänges 11 erstreckenden und entlang des Spritzgestänges 11 geführten Abschnitt 110 aufweist, der mehrere Abzweigstellen 103 für Abzweige 18 zur Versorgung jeweils eines Teils der Ausbringelemente 13 mit Spritzflüssigkeit aufweist.

Eine vorteilhafte Ausführungsvariante der zweiten Ringleitung 100 zeichnet sich dadurch aus, dass der Innendurchmesser des Abschnitts 110 in Strömungsrichtung kleiner wird, vorzugsweise schrittweise kleiner wird.

Die Ringleitung 100 weist somit unterschiedliche Querschnitte auf, um somit möglichst gleichmäßige hohe Durchflussgeschwindigkeiten zu erreichen. Dies hat den Vorteil, um bei Anpassungen der Spritzflüssigkeit, z. B. bei Zugabe eines Pflanzenschutzmittels aus dem dritten Dosiersystem 50 oder Anpassung des Mischungsverhältnisses, schnell an allen Teilabschnitten 19 bzw. und deren zugeordneten Mischkammern 20 und Ausbringelementen 13 das gewünschte Mittel zur Verfügung zu haben. Dadurch wird insbesondere die Trägheit des Systems bei der Anpassung der Konzentration der Flüssigkeit auf ein geringes Niveau reduziert, wodurch es nicht erforderlich ist, für jedes Pflanzenschutzmittel eine eigene Zirkulationsleitung vorzusehen, wie dies bspw. bei Systemen im Stand der Technik der Fall ist.

Hier weist der Rohrabschnitt 111 und der in Strömungsrichtung davorliegende Rohrabschnitt zwischen Pumpe 101 und der ersten Abzweigstelle 103 einen größeren Innendurchmesser auf als die in Strömungsrichtung auf den Rohrabschnitt 111 folgenden Rohrabschnitte 112, 113 und 114, während der darauffolgende Rohrabschnitt 115 wiederum einen noch kleineren Innendurchmesser aufweist. Lediglich beispielhaft kann der Rohrabschnitt 111 und der davorliegende Rohrabschnitt jeweils eine Nennweite DN (franz. Diamètre Nominal) von jeweils DN8 aufweisen, die in Strömungsrichtung folgenden Rohrabschnitte 112, 113 und 114 eine Nennweite von jeweils DN6 aufweisen, während der darauffolgende Rohrabschnitt 115 eine Nennweite von DN4 aufweist. Der auf den Rohrabschnitt 115 in Strömungsrichtung folgende Rohrabschnitt 116 führt zurück zur Hauptmischkammer 70 (hier nicht dargestellt).

Messungen an einer derartigen Spritzvorrichtung zeigen z. B., dass die Strömungsgeschwindigkeit dadurch in dem Abschnitt 110 nicht kontinuierlich abnimmt, wie es bei einer Leitung mit konstantem Innendurchmesser der Fall wäre, sondern nur in einem kleinen Bereich schwankt und insbesondere an der in Strömungsrichtung gesehenen letzten Abzweigstelle 103 ungefähr gleich hoch ist wie an der ersten Abzweigstelle 103.

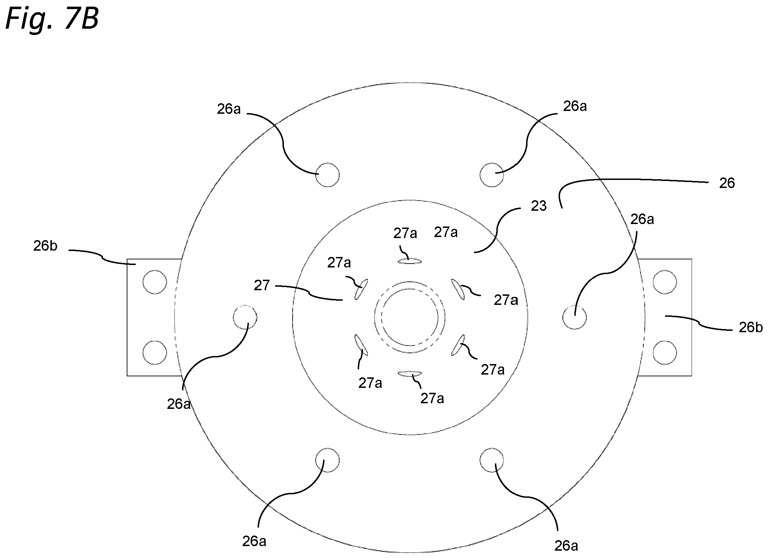

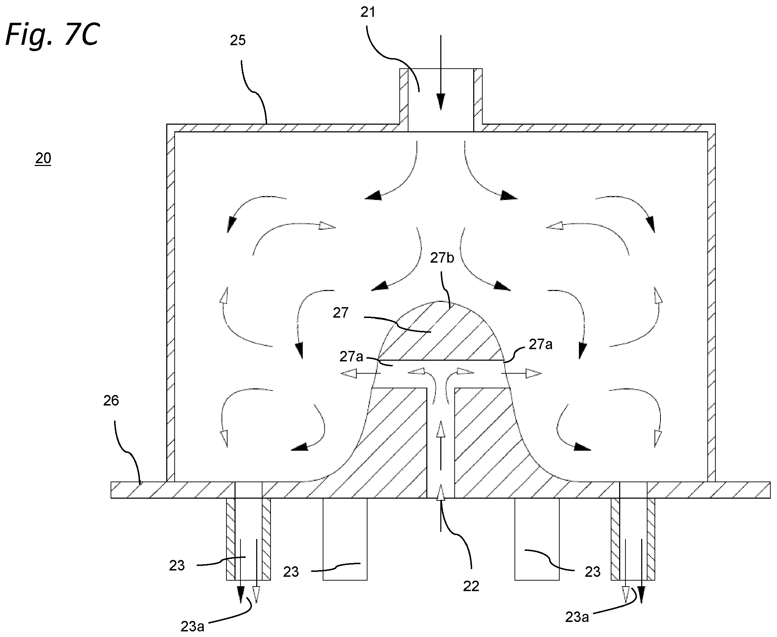

Figur 7A zeigt eine perspektivische Ansicht einer ersten Mischkammer 20 der Spritzvorrichtung gemäß einer Ausführungsform der Erfindung. Nachfolgend wird ferner Bezug genommen auf die Figur 7B, die eine Draufsicht im Schnitt der Mischkammer zeigt, sowie auf die Figur 7C, die eine Seitenansicht im Schnitt der Mischkammer aus Figur 7A zeigt. In Zusammenhang mit den Figuren 7A bis 7C wird die erste Mischkammer auch nur kurz als Mischkammer bezeichnet.

Die zylinderförmige Mischkammer 20 umfasst einen ersten Einlass 21 zum Einlassen eines ersten Flüssigkeitsstroms, einen zweiten Einlass 22 zum Einlassen eines zweiten Flüssigkeitsstroms und mehrere Auslässe (Verteilerauslässe) 23 zum Auslassen des vermischten Flüssigkeitsstroms als mehrere Teilströme 23a. Der erste Flüssigkeitsstrom ist in Figur 7C durch die Pfeile mit schwarzen Pfeilspitzen und der zweite Flüssigkeitsstrom durch Pfeile mit weißen Pfeilspitzen illustriert.

Hierbei ist der erste Einlass 21 mittig an einer ersten Seite der Mischkammer 20 angeordnet. Der zweite Einlass 22 ist an einer der ersten Seite gegenüberliegenden zweiten Seite der Mischkammer angeordnet, dort in einem mittleren Bereich 26c der zweiten Seite. Die Auslässe 23 sind ebenfalls an der zweiten Seite der Mischkammer 20, die den Boden der Mischkammer bildet, angeordnet.

Die zweite Seite bzw. der Boden der Mischkammer 20 wird durch eine kreisringförmige plane Grundplatte 26 gebildet, die eine sich in den Innenraum der Mischkammer 20 hineinragende bzw. erstreckende Erhebung 27 umgibt. Die kreisförmige Grundplatte 26 und die Erhebung 27 können auch als ein Bauteil ausgeführt sein. Die Grundplatte weist nach außen abstehende Befestigungsabschnitte 26b auf, mit Durchgangslöchern, in welche jeweils ein stiftförmiges Befestigungselement, z. B. eine Schraube oder ein Bolzen, geführt sein kann, um die Mischkammer an einem Ausleger 12 des Spritzgestänges 11 zu befestigen.

Auf der Grundplatte 26 sitzt eine zylinderförmige Abdeckhaube 25, die mittig den ersten Einlass 21 in Form eines Anschlusses, z. B. eines Anschlussstutzens, für eine Fluidleitung aufweist. Die Erhebung 27 im Bodenbereich der Mischkammer 20 ist als eine domartig gewölbte oder haubenartige Erhebung ausgebildet. Die Erhebung weist an ihrer Spitze bzw. ihrem distalen Ende einen geschlossenen gewölbten Mittelbereich 27b auf, der fluchtend unterhalb zum ersten Einlass 21 angeordnet ist. Die Erhebung weist unterhalb des gewölbten Mittelbereichs 27b mehrere Durchgangsöffnungen bzw. Eintrittsöffnungen 27a auf, die kreisförmig an der Mantelfläche der Erhebung 27 angeordnet sind. Die Eintrittsöffnungen 27a sind Teil des zweiten Einlasses 22 oder mit diesem fluidisch verbunden, so dass der zweite Flüssigkeitsstrom über die mehreren Eintrittsöffnungen 27a in den Innenraum der Mischkammer 20 eintritt. Hierbei mündet der an der zweiten Seite bzw. Unterseite der Mischkammer 20 mittig unterhalb der Erhebung 27 angeordnete zweite Einlass 22 in einen Einlasskanal, der sich innerhalb der Erhebung 27 zuerst in Richtung der gegenüber liegenden ersten Seite der Mischkammer erstreckt und anschließend um ca. 90° Grad abknickt und aufteilt, um den eintretenden zweiten Flüssigkeitsstrom den Eintrittsöffnungen 27a zuzuleiten. Die Eintrittsöffnungen 27a sind derart an der Erhebung angeordnet, dass der zweite Flüssigkeitsstrom in Form mehrerer Teilströme im Wesentlichen parallel zur zweiten Seite und fächerartig oder kreisscheibenartig in den Innenraum der Mischkammer einströmt.

Gleichzeitig ist der erste Einlass 21 mittig an der ersten Seite und fluchtend zu dem geschlossenen Mittelbereich 27b bzw. der Spitze der Erhebung 27 angeordnet, so dass ein über den ersten Einlass 21 eintretender Flüssigkeitsstrom zumindest teilweise auf den geschlossenen gewölbten Mittelbereich 27b der Erhebung 27 trifft und von dort in Umfangsrichtung gleichmäßig verteilt abgelenkt wird. Dies führt dazu, dass sich die Strömungswege des ersten Flüssigkeitsstroms und die Strömungswege des zweiten Flüssigkeitsstroms kreuzen, was in Figur 7C illustriert ist. Die dadurch entstehenden Verwirbelungen und Turbulenzen führen zu einer möglichst homogenen Durchmischung der beiden Flüssigkeitsströme. Der resultierende vermischte Flüssigkeitsstrom wird über Austrittsöffnungen 26a und die sich daran anschließenden Auslässe 23, die jeweils kreisförmig um die Erhebung 27 an der Bodenplatte 26 angeordnet sind, aus dem Innenraum der Mischkammer 20 herausgeleitet. Die Auslässe 23 sind an der Unterseite der Grundplatte 26 als Anschlüsse, z. B. als Anschlussstutzen, für Fluidleitungen ausgebildet. Vorliegend sind lediglich beispielhaft sechs Verteilerauslässe 23 vorgesehen. Es können jedoch je nachdem, wie viele separate Leitungen an die Mischkammer 20 zur Weiterleitung der vermischten Spritzflüssigkeit angeschlossen werden, auch selbstverständlich eine andere Anzahl von Verteilanschlüssen 23 vorgesehen sein, z. B. acht, wie im nachfolgenden Beispiel beschrieben ist.

Die vorstehend beschriebene Mischkammer 20 bildet somit einen Raumbereich aus, in dem zwei Spritzmittelströme aufeinandertreffen und miteinander vermischt werden. Hierbei sind die Zuleitungsanschlüsse für die Spritzmittelströme so an der Mischkammer 20 angeordnet und ausgebildet, dass die zwei Spritzmittelströme ins Mischkammerinnere eingeleitet werden und sich dort kreuzen und vermischen. Um eine gute Durchmischung zu ermöglichen, ist die ins Mischkammerinnere hineinragende Erhebung 27 vorgesehen, die einerseits ein Ablenkelement für den erste Spritzmittelstrom ausbildet, um diesen senkrecht zu einer Eintritts- und Austrittsrichtung abzulenken und andererseits dazu dient, den anderen Spritzmittelstrom beim Eintritt in einzelne Teilstrahlen aufzufächern und in einer Richtung senkrecht zur Auslassrichtung abzulenken. Die dadurch entstehenden Verwirbelungen und Turbulenzen stellen sicher, dass die beiden Spritzflüssigkeiten zuverlässig vermischt werden, bevor diese als vermischter Spritzmittelstrom in Form einzelner vermischter Teilströme über die Auslässe 23 austreten und den Ausbringleitungen zugeleitet werden.

Die Mischkammer 20 ist insbesondere ausgebildet, die zugeführten Flüssigkeitsströme nicht nur zu vermischen, sondern die resultierende vermischte Spritzflüssigkeit in mehrere Teilströme 23a aufzuteilen, die jeweils über einen der Verteilerauslässe 23 aus der Mischkammer 20 austreten. Die Mischkammer dient somit gleichzeitig als Fluidverteiler zum Aufteilen eines vermischten Flüssigkeitsstroms in mehrere Teilströme, um die in der Mischkammer entstehende Mischung mindestens zweier Spritzflüssigkeiten in Teilströme aufzuteilen und mittels der mehreren Auslässe auf getrennten Teilströmungswegen aus der Mischkammer auszuleiten.

Der erste Einlass 21 und/oder der zweite Einlass 22 und/oder die Auslässe 23 können in die Abdeckhaube 25 oder die Grundplatte eingeschraubt sein oder mit dieser jeweils verschweißt, verklebt, verlötet oder dergl. sein. Auch können diese jeweils ein Innen- oder Aussengewinde zur Montage der jeweiligen Leitung aufweisen.

Um die Mischkammer 20, respektive die Bauteile der Mischkammer möglichst rückstandslos reinigen zu können, kann/können diese zweckmäßig aus Edelstahl gefertigt sein. Auch Kunststoffe mit entsprechend geringen Rauigkeiten aufweisenden Oberflächen wären denkbar.

Figur 8 zeigt den Flüssigkeitsplan der Figur 2, ergänzt um eine Steuereinrichtung 8 und Signal- und/oder Befehlsübertragungselemente 8a zur Illustration der Funktionsweise der Einstellung der jeweiligen mittels der Dosiersysteme auszubringenden Flüssigkeitsmengen.

Zur Steuerung des Spritzvorgangs, z. B. zur Ansteuerung der Ausbringelemente 13 und zur Einstellung der jeweiligen mittels der Dosiersysteme auszubringenden Flüssigkeitsmengen ist eine Steuereinrichtung 8 vorgesehen. Die Steuereinrichtung 8 ist eine programmtechnisch eingerichtete Rechnereinheit bzw. Computersteuerung 100, z.B. umfassend einen Jobrechner.

Die Steuereinrichtung 8 kann flächenspezifisch bei einer Fahrt der Feldspritze 1 über ein Feld gezielt einzelne Ausbringelemente 13 aktivieren und deaktivieren und die über einen Teilabschnitt 19 ausgebrachte Spritzflüssigkeitsmischung und -menge einstellen. Hierzu steht die Steuereinrichtung 8 in Signal- und/oder Kommunikationsverbindung mit den Ausbringelementen 13, mit den einzelnen Sensorelementen, wie z. B. die Durchflussmesser, und mit steuerbaren Elementen, wie die Ventile und Pumpen der Dosiersysteme. Entsprechende Signal- und/oder Befehlsübertragungselemente 8a sind jeweils durch gestrichelte Linien dargestellt. Der besseren Übersichtlichkeit wegen ist nur ein Teil der Signal- und/oder Befehlsübertragungselemente 8a exemplarisch dargestellt. Signal- und/oder Befehlsübertragungselemente zur Ansteuerung der Ausbringelemente 13 sind z. B. nicht dargestellt. Die Signal- und/oder Befehlsübertragungselemente 8a können durch einen Datenbus, z. B. Isobus, realisiert sein oder durch sonstige Leitungen zur Signal- und Datenübertragung.

Die Steuereinrichtung 8 ist ferner ausgebildet, in an sich bekannter Weise Eingabebefehle und Steuerinformationen über eine Benutzerschnittstelle, z. B. Bedienterminal, Tablet-Computer, oder über eine Datenschnittstelle zu empfangen (nicht dargestellt).

Die Steuereinrichtung 8 ist eingerichtet, die Dosiereinrichtungen der Dosiersysteme 30, 40, 50 und die vierten Dosiereinrichtungen 60 zweckmäßig anzusteuern, um die jeweiligen mittels der Dosiersysteme auszubringenden Flüssigkeitsmengen und -mischungen einzustellen.

Die auszubringenden Flüssigkeitsmengen und -mischungen können über entsprechende Eingabeparameter vorgegeben werden. Diese können z. B. die auszubringende Menge (Applikationsmenge) an erster Spritzflüssigkeit 37 aus dem Haupttank 31 und der auszubringenden Menge (Applikationsmenge) aus dem Pflanzenschutzmitteltank 51 festlegen. Werte für diese Eingabeparameter können auf verschiedene Arten vor- bzw. eingegeben werden:
Entsprechende Werte für diese Eingabeparameter können z. B. über eine Benutzereingabe einer Bedienperson über die Benutzerschnittstelle manuell vorgegeben werden und/oder über eine Datenschnittstelle eingelesen werden, z. B. aus einer Datenbank, Applikationskarte oder Ackerschlagkartei. Die Datenbank kann eine Datenbank des Pflanzenschutzmittelherstellers sein. Hierbei kann die Steuereinrichtung 8 zudem mit einem Positionsbestimmungssystem gekoppelt sein. Entsprechende Parameter für die Einstellung können ferner anhand von Kamera- und/oder Sensordaten, welche bspw. einen Unkrautbefall und/oder ein Wachstumsstadium der Pflanzen ermitteln, festgelegt werden.

Beispielhaft wird nachfolgend eine Einstellung der mittels der Dosiersysteme auszubringenden Flüssigkeitsmengen und -mischungen beschrieben.

Durch die Eingabe der Eingabeparameter wird zunächst festgelegt welche Menge eines "Hauptmittels" (erste Spritzflüssigkeit 37) pro Fläche ausgebracht werden soll. Lediglich beispielhaft sollen dies 100l/ha (100 Liter pro 10.000m²) sein. Diese "Hauptaufwandmenge" (erste Spritzflüssigkeit 37) wird anschließend mittels des ersten Dosiersystems 30 entsprechend bereitgestellt und auf die ersten Mischkammern 20 verteilt, in dem die Steuereinrichtung 8 entsprechend in Abhängigkeit der Messwerte des Durchflussmessers 33, die Förderpumpe 32 und das Zirkulationsventil 34 ansteuert. Hierbei wird allen ersten Mischkammern 20 zunächst jeweils die gleiche Menge an Spritzflüssigkeit zugeführt. Zwar kann die Menge angepasst werden, jedoch immer nur über die Gesamtbreite des Spritzgestänges. Anders ausgedrückt, allen ersten Mischkammern 20 kann nur mehr oder weniger "Hauptmittel" zugeführt werden.

Durch die Eingabe der Eingabeparameter kann ferner festgelegt werden, ob und wieviel eines Zusatzmittels (dritte Spritzflüssigkeit 57), z. B. eines Distelmittels, entweder teilflächenspezifisch oder auf die Gesamtfläche ausgebracht werden soll. Eine teilflächenspezifische Ausbringung kann z. B. anhand einer Ackerschlagkartei vorgegeben werden. Beispielsweise wird über die Eingabeparameter vorgegeben, dass 5l/ha, d. h. 5 Liter auf 10.000m² des Zusatzmittels (dritte Spritzflüssigkeit 57) zusätzlich ausgebracht werden sollen.

Da die Handhabung von so geringen Mengen des Zusatzmittels jedoch schwierig ist, wird das Zusatzmittel wiederum mit Klarwasser (zweite Spritzflüssigkeit 47) in der Hauptmischkammer 70 vermischt und damit vorverdünnt. Die Steuereinrichtung 8 ist entsprechend eingerichtet, ausgehend von der ausbringenden Menge an Zusatzmittel, z. B. 5l/ha, ein Mischungsverhältnis zur Vorverdünnung des Zusatzmittels (dritte Spritzflüssigkeit 57) zu bestimmen.

Das zweite Dosier- oder Versorgungssystem dient somit zweckmäßig nur zur Bereitstellung einer Trägerflüssigkeit für das Zusatzmittel (dritte Spritzflüssigkeit 57). Ist beispielsweise ein Mischungsverhältnis von 1/10 als Vorverdünnung definiert bzw. festgelegt, dann bedeutet dies, dass auf 5 Liter Zusatzmittel 50 Liter Klarwasser (oder dergl. Trägerflüssigkeit) kommen. Dieses Mischungsverhältnis erzielt die Steuereinrichtung 8 durch entsprechende Ansteuerung der dritten Dosiereinrichtung 52, 53, 54 zur Bereitstellung der benötigten Menge des Zusatzmittels und durch Ansteuerung der zweiten Dosier- oder Fluidversorgungseinrichtung 42, 43 zur Bereitstellung der benötigten Menge an Klarwasser zur Vorverdünnung des Zusatzmittels in der Hauptmischkammer 70. Hierbei wird die Pumpe 42 der zweiten Dosier- oder Fluidversorgungseinrichtung 42, 43 nur solange aktiviert bis mittels des Durchflussmessers 43 die richtige Menge erfasst worden ist.

Die in der Hauptmischkammer 70 erzeugte Mischung wird dann entlang der zweiten Ringleitung 100 gefördert und wahlweise in definierten Mengen den ersten Mischkammern 20 zugeführt, d.h. bspw. bei teilflächenspezifischen Anwendungen nur einzelnen ersten Mischkammern 20 zugeführt und bspw. in unterschiedlichen Mengen zugeführt. Hierzu steuert die Steuereinrichtung die vierten Dosiereinrichtungen 60 entsprechend an. Ferner wird von der Steuereinrichtung 8 bei der Zufuhr des Zusatzmittels zu den ersten Mischkammern 20 die Vorverdünnung in der Hautmischkammer 70 berücksichtigt, so dass zur Ausbringung von 5 Litern pro Hektar Zusatzmittel über die gesamte Arbeitsbreite den ersten Mischkammern 20 in Summe bei einer Fläche von 1 Hektar nicht 5 Liter, sondern 50 Liter vorverdünntes Gemisch aus zweiter und dritter Spritzflüssigkeit 47, 57 zugeführt wird. Die Steuereinrichtung 8 ist entsprechend eingerichtet, durch Steuerung und/oder Regelung der Dosierventile 53 und 63 die entsprechenden Fördermengen einzustellen.

Die Steuereinrichtung 8 ist ferner ausgebildet, folgende Aspekte zu überwachen und entsprechend einzustellen:
Die vierten Dosiereinrichtungen 60 dosieren jeweils nur dann, wenn zumindest eine, nachgeordnete Spritzdüse 13 geöffnet ist, bzw. dosieren die vierten Dosiereinrichtungen 60 jeweils in Abhängigkeit der Anzahl an geöffneten Spritzdüsen 13 und/oder in Abhängigkeit von der mittels den Spritzdüsen 13 geförderten Ausbringmenge. Somit ist insbesondere eine gezielte Anpassung der Menge je Teilabschnitt, z. B. je Teilbreite, möglich.

Die Steuereinrichtung 8 ist ausgebildet, die zweite Dosier- oder Fluidversorgungseinrichtung 42, 43 und/oder die mindestens eine dritte Dosiereinrichtung 52, 53, 54 so anzusteuern, dass eine Summe der mit den Durchflussmessern 43, 53 der zweiten Dosier- oder Fluidversorgungseinrichtung und der mindestens einen dritten Dosiereinrichtung gemessenen Durchflussmenge gleich ist zur Summe der mit den Durchflussmessern 63 der vierten Dosiereinrichtungen 60 gemessenen Durchflussmenge.

Die vierten Dosiereinrichtungen 60 können insbesondere geschwindigkeitsabhängig und/oder applikationskartenabhängig arbeiten, so dass diese einen festen oder variablen Sollwert der Flüssigkeitsmenge in Abhängigkeit der Geschwindigkeit und/oder in Abhängigkeit einer Applikationskarte definieren. Vorstehend wurde bereits erwähnt, dass zur Festlegung der Eingabeparameter auch Kameradaten, Sensordaten, Datenbankdaten oder dergl. entsprechend herangezogen werden können, um teilabschnittsspezifisch den Ausbringvorgang zu steuern. Auch Daten eines Positionsbestimmungssystems können alternativ oder ergänzend herangezogen werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Feldspritze, z. B. gezogene Feldspritze
- 2: Fahrwerk
- 3: Chassis
- 4: Kabine
- 5: Antriebseinrichtung
- 6: Fahrtrichtung
- 7: Vorratstank
- 8: Steuereinrichtung
- 8a: Signal- und/oder Befehlübertragungselement
- 9: Höhenverstellbares Parallelogrammgestänge
- 10: Spritzvorrichtung
- 11: Spritzgestänge
- 11a: Mittelteil
- 12: Seitlicher Ausleger
- 13: Ausbringelement, z. B. Spritzdüse
- 15: Ausbringleitung
- 16: Ausbringleitung
- 16a: Verzweigungsstelle
- 16b: Leitungszweig
- 16c: Leitungszweig
- 17: Mischkammerzufuhrleitung
- 18: Mischkammerzufuhrleitung
- 19: Teilabschnitt, z. B. Teilbreite
- 20: Erste Mischkammer
- 20A: Erste Mischkammer ohne Fluidverteilerfunktion
- 21: Erster Einlass
- 22: Zweiter Einlass
- 23: Auslass
- 23a: Teilströme
- 24: Auslass
- 25: Abdeckhaube
- 26: Grundplatte, z.B. Bodenplatte
- 26a: Austrittsöffnung
- 26b: Befestigungsbereich
- 26c: Mittlerer Bereich
- 26d: Äußerer Bereich
- 27: Erhebung
- 27a: Durchgangsöffnung
- 27b: Mittelbereich der Erhebung
- 28: Fluidverteiler
- 29: Einlass
- 30: Erstes Dosiersystem
- 31: Vorratstank, z. B. Haupttank
- 32: Pumpe
- 33: Durchflussmesser
- 34: Zirkulationsventil
- 35: Erste Zufuhrleitung, z. B. erste Ringleitung, Zirkulationsleitung
- 36: Abzweigstelle zur Mischkammer
- 37: Erste Spritzflüssigkeit, z. B. Hauptmischung
- 40: Zweites Dosier- oder Versorgungssystem
- 41: Vorratstank, z. B. Frischwasserbehälter
- 42: Pumpe
- 43: Durchflussmesser
- 47: Zweite Spritzflüssigkeit, z. B: Frischwasser
- 45: Rückschlagventil
- 50: Drittes Dosiersystem
- 51: Vorratstank, z. B. Pflanzenschutzmitteltank
- 52: Pumpe
- 53: Durchflussmesser
- 54: Dosierventil
- 57: Dritte Spritzflüssigkeit, z. B. Pflanzenschutzmittel
- 60: Vierte Dosiereinrichtung
- 63: Durchflussmesser
- 64: Dosierventil
- 65: Rückschlagventil
- 70: Hauptmischkammer
- 100: Zweite Zufuhrleitung, z. B. zweite Ringleitung, Zirkulationsleitung
- 101: Drosselventil
- 102: Pumpe
- 103: Abzweigstelle zur Mischkammer
- 104: Filter
- 110: Leitungsabschnitt mit kleiner werdendem Innendurchmesser
- 111-116: Leitungsabschnitt
- A: Schwenkachse in Fahrtrichtung
- B: Längsrichtung des Auslegers
- V: Vertikalrichtung des Auslegers

## Patentansprüche

1. Spritzvorrichtung (10) für eine landwirtschaftliche Feldspritze zum dosierten Ausbringen von Spritzflüssigkeit, vorzugsweise auf landwirtschaftlichen Nutzflächen, umfassend:
a) ein erstes Dosiersystem (30), umfassend einen ersten Vorratsbehälter (31) für eine erste Spritzflüssigkeit (37) und eine erste Dosiereinrichtung;
b) ein zweites Dosier- oder Versorgungssystem (40), umfassend einen zweiten Vorratsbehälter (41) für eine zweite Spritzflüssigkeit (47), vorzugsweise Klarwasser, und eine zweite Dosier- oder Fluidversorgungseinrichtung;
c) ein drittes Dosiersystem (50), umfassend mindestens eine dritte Dosiereinrichtung und mindestens einen dritten Vorratsbehälter (51) und/oder mindestens eine Behälteraufnahme zur lösbaren Halterung eines dritten Vorratsbehälters, vorzugsweise eines Kanisters, für mindestens eine dritte Spritzflüssigkeit (57) und;
d) ein schwenkbares Spritzgestänge (11), umfassend zwei seitliche Ausleger (11), wobei das Spritzgestänge (11), und vorzugsweise jeder der Ausleger (11), in mehrere Teilabschnitte (19) unterteilt ist, wobei an jedem Teilabschnitt (1) eine Mehrzahl von Ausbringelementen (13) zum Versprühen und/oder Feinverteilen der Spritzflüssigkeit angeordnet ist und jedes Ausbringelement (13) genau einem Teilabschnitt (19) zugeordnet ist;
e) mehrere erste Mischkammern (20), wobei jedem Teilabschnitt (19) jeweils eine der ersten Mischkammern (20) zugeordnet ist, die stromauf zu den dem jeweiligen Teilabschnitt zugeordneten Ausbringelementen (13) angeordnet ist, wobei die ersten Mischkammern (20) eingangsseitig an eine erste Ringleitung (35) oder Stichleitung fluidisch angeschlossen sind, der die erste Spritzflüssigkeit (37) durch die erste Dosiereinrichtung zuführbar ist; und
f) eine Steuereinrichtung (8), die ausgebildet ist, zum Versprühen und/oder Feinverteilen der Spritzflüssigkeit das erste Dosiersystem (30), das zweite Dosier- oder Versorgungssystem (40), das dritte Versorgungssystem (50) und die Ausbringelemente (13) zu steuern und/oder zu regeln, wobei
die zweite Dosier- oder Fluidversorgungseinrichtung eine Druckerzeugungseinheit, vorzugsweise eine Pumpe (42), umfasst und die mindestens eine dritte Dosiereinrichtung jeweils ein Dosierventil (54) und eine Druckerzeugungseinheit, vorzugsweise eine Pumpe (52), umfasst; **dadurch gekennzeichnet, dass**
die zweite Dosier- oder Fluidversorgungseinrichtung einen Durchflussmesser (43) und ein Rückschlagventil (45) umfasst und der zweite Vorratsbehälter (41) ein Wassertank ist; und
die mindestens eine dritte Dosiereinrichtung jeweils einen Durchflussmesser (53) umfasst und der dritte Vorratsbehälter (51) ein im Vergleich zum zweiten Vorratsbehälter (41) kleinerer Vorratsbehälter für ein Pflanzenschutzmittel ist.

2. Spritzvorrichtung (10) nach Anspruch 1, ferner umfassend
a) eine Hauptmischkammer (70), der die zweite Spritzflüssigkeit (47) durch die zweite Dosier- oder Fluidversorgungseinrichtung und die mindestens eine dritte Spritzflüssigkeit (57) durch die mindestens eine dritte Dosiereinrichtung zuführbar ist; und
b) eine zweite Ringleitung (100) oder Stichleitung, die fluidisch mit der Hauptmischkammer (70) verbunden ist und Abzweige (18) zur Versorgung der ersten Mischkammern (20) aufweist, wobei die ersten Mischkammern (20) eingangsseitig jeweils an einen der Abzweige (18) der zweiten Ringleitung (100) oder Stichleitung fluidisch angeschlossen sind.

3. Spritzvorrichtung (10) nach Anspruch 1 oder 2, wobei die Steuereinrichtung (8) ausgebildet ist, den Ausbringelementen (13) oder Ausbringelementen (13) ausgewählter Teilabschnitte (19) durch Ansteuerung der ersten Dosiereinrichtung, der zweiten Dosier- oder Fluidversorgungseinrichtung und der mindestens einen dritten Dosiereinrichtung wahlweise eine Mischung aus zumindest zwei der Spritzflüssigkeiten (37, 47, 57) in einem festlegbaren Mischungsverhältnis oder nur eine der Spritzflüssigkeit zuzuführen.

4. Spritzvorrichtung (10) nach einem der vorherigen Ansprüche 2 oder 3, ferner aufweisend jeweils in den Abzweigen (18) angeordnete vierte Dosiereinrichtungen (60), umfassend jeweils einen Durchflussmesser (63) und ein Dosierventil (64), zum Steuern und/oder Regeln einer den ersten Mischkammern (20) aus der zweiten Ringleitung (100) oder Stichleitung zugeführten Menge an Spritzflüssigkeit.

5. Spritzvorrichtung (10) nach Anspruch 4, wobei die Steuereinrichtung (8) ausgebildet ist, die vierten Dosiereinrichtungen (60), vorzugsweise deren Dosierventil (64), jeweils in Abhängigkeit von einer Größe anzusteuern und/oder zu regeln, die ein Maß für eine Sollausbringmenge an zweiter und/oder dritter Spritzflüssigkeit (47, 57) angibt, die durch die Ausbringelemente desjenigen Teilabschnitts ausgegeben werden sollen, der von der jeweiligen vierten Dosiereinrichtung (60) versorgt wird.

6. Spritzvorrichtung (10) nach einem der vorherigen Ansprüche, wobei die Steuereinrichtung (8) ausgebildet ist, in Abhängigkeit von einem Sollmischverhältnis der zweiten und dritten Spritzflüssigkeit (47, 57) die zweite Dosier- oder Fluidversorgungseinrichtung und die mindestens eine dritte Dosiereinrichtung derart anzusteuern, dass der Hauptmischkammer (70) die zweite und dritte Spritzflüssigkeit (47, 57) eingangsseitig in dem Sollmischverhältnis zugeführt werden.

7. Spritzvorrichtung (10) nach einem der Ansprüche 4 bis 6, wobei die Steuereinrichtung (8) ausgebildet ist, die zweite Dosier- oder Fluidversorgungseinrichtung und/oder die mindestens eine dritte Dosiereinrichtung so anzusteuern, dass eine Summe der mit den Durchflussmessern (43, 53) der zweiten Dosiereinrichtung und der mindestens einen dritten Dosiereinrichtung gemessenen Durchflussmenge gleich ist zur Summe der mit den Durchflussmessern (63) der vierten Dosiereinrichtungen (60) gemessenen Durchflussmenge.

8. Spritzvorrichtung (10) nach einem der vorherigen Ansprüche, wobei die Steuereinrichtung (8) zur Herstellung einer Mischung der ersten Spritzflüssigkeit (47) mit der zweiten und/oder mindestens einen dritten Spritzflüssigkeit (47, 57) ausgebildet ist, das erste Dosiersystem (30) derart anzusteuern und das zweite Dosier- oder Versorgungssystem (40) und/oder das dritte Dosiersystem (50) derart anzusteuern, dass allen ersten Mischkammern (20) oder einer Teilauswahl hiervon sowohl die erste Spritzflüssigkeit (37) als auch die zweite und/oder dritte Spritzflüssigkeit (47, 57) in einem festlegbaren Mengenverhältnis zugeführt wird.

9. Spritzvorrichtung (10) nach einem der vorherigen Ansprüche, wobei das dritte Dosiersystem (50) zur Bereitstellung unterschiedlicher Pflanzenschutzmittel mehrere dritte Vorratsbehälters (51) und/oder mehrere Behälteraufnahmen zur lösbaren Halterung eines dritten Vorratsbehälters für mindestens eine dritte Spritzflüssigkeit (57) und diesen zugeordnete dritte Dosiereinrichtungen (52, 53, 54) aufweist, wobei die Steuereinrichtung (8) zur Bereitstellung dosierter Mengen an Pflanzenschutzmittel ausgebildet ist, die dritten Dosiereinrichtungen derart anzusteuern, dass der Hauptmischkammer (70) wahlweise eines oder mehrere der Pflanzenschutzmittel in einer festlegbaren Dosiermenge zugeführt werden.

10. Spritzvorrichtung (10) nach einem der vorherigen Ansprüche, wobei die erste Dosiereinrichtung einen Durchflussmesser (33) und eine Druckerzeugungseinheit, vorzugsweise eine Pumpe (32), umfasst und der erste Vorratsbehälter (31) vorzugsweise ein Haupttank für eine erste vorgemischte Spritzflüssigkeit ist.

11. Spritzvorrichtung (10) nach einem der vorherigen Ansprüche, ferner aufweisend fünfte Dosiereinrichtungen, über die die ersten Mischkammern (20) an die erste Ringleitung (35) oder Stichleitung fluidisch angeschlossen sind, wobei die fünften Dosiereinrichtungen jeweils ein Dosierventil umfassen.

12. Spritzvorrichtung (10) nach einem der vorherigen Ansprüche, wenn abhängig von Anspruch 2, wobei die zweite Ringleitung (100) oder Stichleitung einen Abschnitt (110), vorzugsweise einen entlang des Spritzgestänges (11) geführten Abschnitt, aufweist, dessen Innendurchmesser in Strömungsrichtung kleiner wird, vorzugsweise schrittweise kleiner wird, wobei sich der Abschnitt (110) entlang von Abzweigstellen (103) der Abzweige (18) von der zweiten Ringleitung (100) oder Stichleitung erstreckt.

13. Spritzvorrichtung (10) nach Anspruch 12, wobei der kleiner werdende Innendurchmesser so festgelegt ist, dass eine Strömungsgeschwindigkeit der Spritzflüssigkeit
a) an mindestens einer Abzweigstelle (103), die stromab zu einer ersten Abzweigstelle (103) liegt, mindestens so hoch ist wie an der ersten Abzweigstelle (103); und/oder
b) in dem Abschnitt nicht kontinuierlich abnimmt und/oder sich zwischen der ersten und letzten Abzweigstelle (103) um nicht mehr als 2 m/s, weiter vorzugsweise um nicht mehr als 1 m/s schwankt.

14. Spritzvorrichtung (10) nach einem der vorhergehenden Ansprüche, wobei
a1) die erste Mischkammer (20) ausgangsseitig mehrere Verteilerauslässe (23) aufweist oder
a2) stromab zu einem Auslass (24) der ersten Mischkammer (20A) ein Fluidverteiler zum Aufteilen von Spritzflüssigkeit auf mehrere Teilströme angeordnet ist, aufweisend mehrere Verteilerauslässe (23) für die Teilströme, und
b) die stromab zu der jeweiligen ersten Mischkammer (20, 20A) angeordneten Ausbringelemente (13) jeweils über eine Ausbringleitung (15; 16) mit einem der Verteilerauslässe (23) verbunden sind.

15. Spritzvorrichtung (10) nach Anspruch 14, wobei
a) jedes der Ausbringelemente (13) über eine separate Ausbringleitung (15) mit einem der Verteilerauslässe (14b) fluidisch verbunden ist; oder
b) zumindest einige der Ausbringleitungen (16), vorzugsweise alle Ausbringleitungen (16), jeweils zumindest eine Verzweigungsstelle (16a) aufweisen, die eine Mehrzahl von Leitungszweigen (16b, 16c) bereitstellt, wobei jeweils ein Leitungszweig (16b, 16c) die Verzweigungsstelle (16a) mit einem Ausbringelement (13) verbindet, wobei optional die Verzweigungsstelle (16a) nach Art einer Y-Verzweigung oder nach Art einer T-Verzweigung ausgebildet ist.

16. Spritzvorrichtung (10) nach Anspruch 14 oder 15, wobei die Ausbringleitungen (15; 16) derart ausgelegt sind, dass die aus einer ersten Mischkammer (20) oder Fluidverteiler (28) austretenden Teilströme auf ihren getrennten Teilströmungswegen von der ersten Mischkammer (20) oder Fluidverteiler (28) zu den jeweiligen Ausbringelementen (13) im Wesentlichen den gleichen Druckabfall und gleichen Zeitverzug, bis die Teilströme an dem jeweiligen Ausbringelement ankommen, aufweisen.

17. Spritzvorrichtung (10) nach einem der Ansprüche 14 bis 16, wobei diejenigen Ausbringleitungen (15; 16), die am gleichen Fluidverteiler (28) oder der gleichen ersten Mischkammer (20) angeschlossen sind, jeweils die gleiche Länge aufweisen, oder wobei alle Ausbringleitungen (15; 16) die gleiche Länge aufweisen.

18. Spritzvorrichtung (10) nach einem der Ansprüche 14 bis 17, wobei zumindest ein Teil der Ausbringleitungen (15; 16)
a) als Schlauchleitungen und/oder als flexible Leitungen ausgeführt sind; und/oder
b) einen nicht-geraden Verlauf, vorzugsweise gekrümmten, Verlauf aufweisen, und/oder
c) mindestens einen Abschnitt aufweist, der in Längsrichtung (B) des Auslegers entlang eines der Ausleger geführt ist und mindestens einen Abschnitt aufweist, der in Vertikalrichtung (V) entlang eines der Ausleger geführt ist.

19. Spritzvorrichtung (10) nach einem der vorhergehenden Ansprüche,
a) wobei die erste Dosiereinrichtung, die mindestens eine dritte Dosiereinrichtung, und/oder die vierte Dosiereinrichtung nach Anspruch 3 ein als pulsweitenmoduliertes Ventil ausgebildetes Dosierventil umfasst; und/oder
b) wobei die zweite Dosier- oder Fluidversorgungseinrichtung kein Dosierventil umfasst.

20. Spritzvorrichtung (10) nach einem der vorherigen Ansprüche, wobei an dem mindestens einen dritten Vorratsbehälter (51) des dritten Dosiersystems (50) eine Spülleitung angeschlossen ist, über die dem dritten Vorratsbehälter (51) zur Reinigung des dritten Vorratsbehälters (57) in einem Reinigungsmodus Klarwasser aus dem ersten Dosiersystem (30) und/oder dem zweiten Dosier- oder Versorgungssystem (40) zuführbar ist.

21. Spritzvorrichtung (10) nach einem der vorherigen Ansprüche, wobei in einem oder mehreren des mindestens einen dritten Vorratsbehälters (51) ein Rührwerk zur Vermeidung oder Reduzierung von Ablagerungen der dritten Spritzflüssigkeit angeordnet ist.

22. Spritzvorrichtung (10) nach einem der vorherigen Ansprüche,
a) wobei die Ausbringelemente (13) Spritzdüsen oder Spritzdüsen aufweisende Düsenstöcke sind; und/oder
b) wobei das Spritzgestänge um eine in Fahrtrichtung verlaufende Schwenkachse (A) bewegbar an einem Trägerfahrzeug (2) mittelbar oder unmittelbar angeordnet ist, und/oder wobei die zwei seitlichen Ausleger (12) jeweils über eine vertikale Schwenkachse drehbar mit einem Mittelteil (11a) des Spritzgestänges (11) verbunden sind, und wobei jeder Ausleger (12) zueinander verschwenkbare Segmente aufweist, die um aufrechte Achsen zueinander verschwenkbar sind und die in einer senkrecht zur Fahrtrichtung der landwirtschaftlichen Verteilmaschine angeordneten Ebene relativ zueinander verschwenkbar sind.

23. Landwirtschaftliche Feldspritze (1), umfassend eine Spritzvorrichtung (10) nach einem der vorherigen Ansprüche, wobei die Feldspritze beispielsweise eine selbstfahrende (1) oder eine mittels eines Zugfahrzeugs gezogene oder eine an ein Zugfahrzeug angebaute Feldspritze ist.

## Claims

1. A spraying device (10) for an agricultural field sprayer for metered application of a spray liquid, preferably on agricultural land, comprising:
a) a first metering system (30) comprising a first tank (31) for a first spray liquid (37) and a first metering device;
b) a second metering or supply system (40) comprising a second tank (41) for a second spray liquid (47), preferably clear water, and a second metering or fluid-supply device;
c) a third metering system (50) comprising at least one third metering device and at least one third tank (51) and/or at least one container holder for releasable retention of a third tank, preferably a canister, for at least one third spray liquid (57); and
d) a pivotable spray boom (11) comprising two lateral boom sections (11), wherein the spray boom (11), and preferably each of the boom sections (11), is divided into a plurality of sections (19), wherein on each section (1) a plurality of application elements (13) for spraying and/or finely distributing the spray liquid is arranged and each application element (13) is assigned to exactly one section (19);
e) a plurality of first mixing chambers (20), wherein one of the first mixing chambers (20) is in each case assigned to each section (19) and is arranged upstream of the application elements (13) assigned to the respective section, wherein the first mixing chambers (20) are fluidically connected on the inlet side to a first ring line (35) or branch line to which the first spray liquid (37) is suppliable by the first metering device; and
f) a control unit (8) which is configured, for spraying and/or finely distributing the spray liquid, to control and/or regulate the first metering system (30), the second metering or supply system (40), the third metering system (50) and the application elements (13), wherein
the second metering or fluid-supply device comprises a pressure-generating unit, preferably a pump (42), and the at least one third metering device in each case comprises a metering valve (54) and a pressure-generating unit, preferably a pump (52);
**characterized in that**
the second metering or fluid-supply device comprises a flow meter (43) and a check valve (45) and the second tank (41) is a water tank; and
each of the at least one third metering devices comprises a flow meter (53) and the third tank (51) is, in comparison with the second tank (41), a smaller tank for a plant-protection product.

2. The spraying device (10) according to claim 1, further comprising
a) a main mixing chamber (70), to which the second spray liquid (47) is suppliable via the second metering or fluid-supply device and the at least one third spray liquid (57) is suppliable via the at least one third metering device; and
b) a second ring line (100) or branch line which is in fluid communication with the main mixing chamber (70) and has branches (18) for supplying the first mixing chambers (20), wherein the first mixing chambers (20) are in each case fluidically connected on the inlet side to a respective one of the branches (18) of the second ring line (100) or branch line.

3. The spraying device (10) according to claim 1 or 2, wherein the control unit (8) is configured to selectively supply to the application elements (13) or to the application elements (13) of selected sections (19), by actuating the first metering device, the second metering or fluid-supply device and the at least one third metering device, either a mixture of at least two of the spray liquids (37, 47, 57) in a definable mixing ratio or only one of the spray liquids.

4. The spraying device (10) according to any one of the preceding claims 2 or 3, further having fourth metering devices (60) arranged in the respective branches (18), each comprising a flow meter (63) and a metering valve (64), for controlling and/or regulating an amount of spray liquid supplied from the second ring line (100) or branch line to the first mixing chambers (20).

5. The spraying device (10) according to claim 4, wherein the control unit (8) is configured to actuate and/or regulate the fourth metering devices (60), preferably their metering valve (64), in each case in dependence on a variable indicating a target application amount of second and/or third spray liquid (47, 57) to be discharged by the application elements of the section which is supplied by the respective fourth metering device (60).

6. The spraying device (10) according to any one of the preceding claims, wherein the control unit (8) is configured, in dependence on a target mixing ratio of the second and third spray liquid (47, 57), to actuate the second metering or fluid-supply device and the at least one third metering device such that the second and third spray liquid (47, 57) are supplied on the inlet side to the main mixing chamber (70) in the target mixing ratio.

7. The spraying device (10) according to any one of claims 4 to 6, wherein the control unit (8) is configured to actuate the second metering or fluid-supply device and/or the at least one third metering device such that a sum of the flow rate measured by the flow meters (43, 53) of the second metering device and of the at least one third metering device is equal to the sum of the flow rate measured by the flow meters (63) of the fourth metering devices (60).

8. The spraying device (10) according to any one of the preceding claims, wherein the control unit (8) is configured, for producing a mixture of the first spray liquid (37) with the second and/or at least one third spray liquid (47, 57), to actuate the first metering system (30) and to actuate the second metering or supply system (40) and/or the third metering system (50) such that all of the first mixing chambers (20) or a subset thereof are supplied with both the first spray liquid (37) and the second and/or third spray liquid (47, 57) in a definable mixing ratio.

9. The spraying device (10) according to any one of the preceding claims, wherein the third metering system (50), for providing different plant-protection products, has multiple third tanks (51) and/or multiple container holders for releasable retention of a third tank for at least one third spray liquid (57) and third metering devices (52, 53, 54) assigned thereto, wherein the control unit (8) is configured, for providing metered amounts of plant-protection product, to actuate the third metering devices such that one or more of the plant-protection products are selectively supplied to the main mixing chamber (70) in a definable metered amount.

10. The spraying device (10) according to any one of the preceding claims, wherein the first metering device comprises a flow meter (33) and a pressure-generating unit, preferably a pump (32), and the first tank (31) is preferably a main tank for a first premixed spray liquid.

11. The spraying device (10) according to any one of the preceding claims, further having fifth metering devices via which the first mixing chambers (20) are fluidically connected to the first ring line (35) or branch line, wherein the fifth metering devices each comprise a metering valve.

12. The spraying device (10) according to any one of the preceding claims, if dependent on claim 2, wherein the second ring line (100) or branch line has a section (110), preferably a section guided along the spray boom (11), whose inner diameter becomes smaller in the flow direction, preferably decreases stepwise, wherein the section (110) extends along branching points (103) of the branches (18) from the second ring line (100) or branch line.

13. The spraying device (10) according to claim 12, wherein the decreasing inner diameter is defined such that a flow velocity of the spray liquid
a) at least at one branching point (103) located downstream of a first branching point (103) is at least as high as at the first branching point (103); and/or
b) in the section does not continuously decrease and/or fluctuates between the first and last branching point (103) by not more than 2 m/s, more preferably by not more than 1 m/s.

14. The spraying device (10) according to any one of the preceding claims, wherein
a1) the first mixing chamber (20) has, on the outlet side, multiple distributor outlets (23); or
a2) downstream of an outlet (24) of the first mixing chamber (20A), a fluid distributor for dividing spray liquid into multiple partial flows is arranged, having multiple distributor outlets (23) for the partial flows, and
b) the application elements (13) arranged downstream of the respective first mixing chamber (20, 20A) are each connected via an application line (15; 16) to one of the distributor outlets (23).

15. The spraying device (10) according to claim 14, wherein
a) each of the application elements (13) is fluidically connected via a separate application line (15) to one of the distributor outlets (23); or
b) at least some of the application lines (16), preferably all of the application lines (16), each have at least one branching point (16a) which provides a plurality of line branches (16b, 16c), wherein in each case one line branch (16b, 16c) connects the branching point (16a) with one application element (13), optionally wherein the branching point (16a) is designed in the manner of a Y-branch or in the manner of a T-branch.

16. The spraying device (10) according to claim 14 or 15, wherein the application lines (15; 16) are designed such that the partial flows emerging from a first mixing chamber (20) or fluid distributor (28), on their separate flow paths from the first mixing chamber (20) or fluid distributor (28) to the respective application elements (13), have substantially the same pressure drop and the same time delay until the partial flows reach the respective application element.

17. The spraying device (10) according to any one of claims 14 to 16, wherein those application lines (15; 16) which are connected to the same fluid distributor (28) or the same first mixing chamber (20) each have the same length, or wherein all of the application lines (15; 16) have the same length.

18. The spraying device (10) according to any one of claims 14 to 17, wherein at least a part of the application lines (15; 16)
a) are formed as hose lines and/or as flexible lines; and/or
b) have a non-straight course, preferably a curved course; and/or
c) have at least one section which, in the longitudinal direction (B) of the boom, is guided along one of the booms and at least one section which, in the vertical direction (V), is guided along one of the booms.

19. The spraying device (10) according to any one of the preceding claims,
a) wherein the first metering device, the at least one third metering device, and/or the fourth metering device according to claim 3 comprises a metering valve designed as a pulse-width modulated valve; and/or
b) wherein the second metering or fluid-supply device comprises no metering valve.

20. The spraying device (10) according to any one of the preceding claims, wherein a rinsing line is connected to the at least one third tank (51) of the third metering system (50), via which clear water from the first metering system (30) and/or the second metering or supply system (40) is suppliable to the third tank (51) for cleaning of the third tank (57).

21. The spraying device (10) according to any one of the preceding claims, wherein in one or more of the at least one third tank (51) an agitator is arranged for avoiding or reducing deposits of the third spray liquid.

22. The spraying device (10) according to any one of the preceding claims,
a) wherein the application elements (13) are spray nozzles or nozzle bodies having spray nozzles; and/or
b) wherein the spray boom is movably arranged on a carrier vehicle (2), directly or indirectly, about a pivot axis (A) extending in the travel direction, and/or wherein the two lateral booms (12) are each rotatably connected via a vertical pivot axis with a central part (11a) of the spray boom (11), and wherein each boom (12) has segments pivotable relative to one another, which are pivotable about upright axes relative to one another and which are pivotable relative to one another in a plane arranged perpendicular to the travel direction of the agricultural distribution machine.

23. An agricultural field sprayer (1), comprising a spraying device (10) according to any one of the preceding claims, wherein the field sprayer is, for example, a self-propelled sprayer (1) or a field sprayer towed by a tractor or mounted on a tractor.

## Revendications

1. Dispositif de pulvérisation (10) pour un pulvérisateur de champ agricole destiné au déchargement dosé de liquide à pulvériser, de préférence sur des surfaces agricoles utiles, comprenant :
a) un premier système de dosage (30), comprenant un premier réservoir (31) pour un premier liquide à pulvériser (37) et un premier appareil de dosage ;
b) un deuxième système de dosage ou d'alimentation (40), comprenant un deuxième réservoir (41) pour un deuxième liquide à pulvériser (47), de préférence de l'eau claire, et un deuxième appareil de dosage ou d'alimentation en fluide ;
c) un troisième système de dosage (50), comprenant au moins un troisième appareil de dosage et au moins un troisième réservoir (51) et/ou au moins un logement de réservoir pour le maintien amovible d'un troisième réservoir, de préférence un bidon, pour au moins un troisième liquide à pulvériser (57) et ;
d) une rampe de pulvérisation pivotante (11), comprenant deux bras latéraux (11), la rampe de pulvérisation (11), et de préférence chacun des bras (11), étant divisée en plusieurs sections partielles (19), une pluralité d'éléments de déchargement (13) étant agencés sur chaque section partielle (1) pour pulvériser et/ou distribuer finement le liquide à pulvériser, et chaque élément de déchargement (13) étant associé à exactement une section partielle (19) ;
e) plusieurs premières chambres de mélange (20), chaque section partielle (19) étant respectivement associée à l'une des premières chambres de mélange (20), qui est agencée en amont des éléments de déchargement (13) associés à la section partielle respective, les premières chambres de mélange (20) étant raccordées côté entrée à une première conduite annulaire (35) ou à une conduite de dérivation, à laquelle le premier liquide à pulvériser (37) peut être amené par le premier appareil de dosage ; et
f) un appareil de commande (8) qui est réalisé pour commander et/ou réguler le premier système de dosage (30), le deuxième système de dosage ou d'alimentation (40), le troisième système d'alimentation (50) et les éléments de déchargement (13) pour pulvériser et/ou distribuer finement le liquide à pulvériser,
le deuxième appareil de dosage ou d'alimentation en fluide comprenant une unité de génération de pression, de préférence une pompe (42), et l'au moins un troisième appareil de dosage comprenant respectivement une soupape de dosage (54) et une unité de génération de pression, de préférence une pompe (52) ; **caractérisé en ce que**
le deuxième appareil de dosage ou d'alimentation en fluide comprend un débitmètre (43) et un clapet anti-retour (45) et le deuxième réservoir (41) est un réservoir d'eau ; et
l'au moins un troisième appareil de dosage comprend respectivement un débitmètre (53) et le troisième réservoir (51) est un réservoir plus petit que le deuxième réservoir (41) pour un produit phytosanitaire.

2. Dispositif de pulvérisation (10) selon la revendication 1, comprenant en outre
a) une chambre de mélange principale (70), à laquelle le deuxième liquide à pulvériser (47) peut être amené par le deuxième appareil de dosage ou d'alimentation en fluide et l'au moins un troisième liquide à pulvériser (57) peut être amené par l'au moins un troisième appareil de dosage ; et
b) une deuxième conduite circulaire (100) ou une conduite de dérivation, qui est reliée fluidiquement à la chambre de mélange principale (70) et qui présente des dérivations (18) pour alimenter les premières chambres de mélange (20), les premières chambres de mélange (20) étant raccordées fluidiquement côté entrée respectivement à l'une des dérivations (18) de la deuxième conduite circulaire (100) ou de la conduite de dérivation.

3. Dispositif de pulvérisation (10) selon la revendication 1 ou 2, dans lequel l'appareil de commande (8) est réalisé pour amener aux éléments de déchargement (13) ou aux éléments de déchargement (13) de sections partielles sélectionnées (19) au choix un mélange d'au moins deux des liquides à pulvériser (37, 47, 57) en un rapport de mélange pouvant être défini ou seulement l'un des liquides à pulvériser par commande du premier appareil de dosage, du deuxième appareil de dosage ou d'alimentation en fluide et de l'au moins un troisième appareil de dosage.

4. Dispositif de pulvérisation (10) selon l'une quelconque des revendications 2 ou 3 précédentes, présentant en outre des quatrièmes appareils de dosage (60) agencés respectivement dans les dérivations (18), comprenant chacun un débitmètre (63) et une soupape de dosage (64), pour commander et/ou réguler une quantité de liquide à pulvériser amenée aux premières chambres de mélange (20) à partir de la deuxième conduite circulaire (100) ou de la conduite de dérivation.

5. Dispositif de pulvérisation (10) selon la revendication 4, dans lequel l'appareil de commande (8) est réalisé pour commander et/ou réguler les quatrièmes appareils de dosage (60), de préférence leur soupape de dosage (64), respectivement en fonction d'une grandeur qui indique une mesure d'une quantité de déchargement de consigne d'un deuxième et/ou d'un troisième liquide à pulvériser (47, 57) qui doivent être déchargées par les éléments de déchargement de la section partielle alimentée par le quatrième appareil de dosage (60) respectif.

6. Dispositif de pulvérisation (10) selon l'une quelconque des revendications précédentes, dans lequel l'appareil de commande (8) est réalisé pour commander, en fonction d'un rapport de mélange de consigne entre le deuxième et le troisième liquide à pulvériser (47, 57), le deuxième appareil de dosage ou d'alimentation en fluide et l'au moins un troisième appareil de dosage de telle sorte que les deuxième et troisième liquides à pulvériser (47, 57) soient amenés à la chambre de mélange principale (70) côté entrée en le rapport de mélange de consigne.

7. Dispositif de pulvérisation (10) selon l'une quelconque des revendications 4 à 6, dans lequel l'appareil de commande (8) est réalisé pour commander le deuxième appareil de dosage ou d'alimentation en fluide et/ou l'au moins un troisième appareil de dosage de telle sorte qu'une somme des débits mesurés avec les débitmètres (43, 53) du deuxième appareil de dosage et de l'au moins un troisième appareil de dosage est égale à la somme des débits mesurés avec les débitmètres (63) des quatrièmes appareils de dosage (60).

8. Dispositif de pulvérisation (10) selon l'une quelconque des revendications précédentes, dans lequel l'appareil de commande (8) est réaliser, pour produire un mélange du premier liquide à pulvériser (47) avec le deuxième et/ou au moins un troisième liquide à pulvériser (47, 57), pour commander le premier système de dosage (30) et pour commander le deuxième système de dosage ou d'alimentation (40) et/ou le troisième système de dosage (50) de telle sorte qu'à la fois le premier liquide à pulvériser (37) et le deuxième et/ou le troisième liquide à pulvériser (47, 57) soient amenés à toutes les premières chambres de mélange (20) ou une sélection partielle de celles-ci en un rapport quantitatif pouvant être défini.

9. Dispositif de pulvérisation (10) selon l'une quelconque des revendications précédentes, dans lequel le troisième système de dosage (50), pour fournir différents produits phytosanitaires, présente plusieurs troisièmes réservoirs (51) et/ou plusieurs logements de réservoir pour maintenir de manière amovible un troisième réservoir pour au moins un troisième liquide à pulvériser (57) et des troisièmes appareils de dosage (52, 53, 54) qui leur sont associés, l'appareil de commande (8) étant réalisé, pour fournir des quantités dosées de produit phytosanitaire, pour commander les troisièmes appareils de dosage de telle sorte qu'un ou plusieurs des produits phytosanitaires soient amenés au choix à la chambre de mélange principale (70) en une quantité de dosage pouvant être définie.

10. Dispositif de pulvérisation (10) selon l'une quelconque des revendications précédentes, dans lequel le premier appareil de dosage comprend un débitmètre (33) et une unité de génération de pression, de préférence une pompe (32), et le premier réservoir (31) est de préférence un réservoir principal pour un premier liquide à pulvériser prémélangé.

11. Dispositif de pulvérisation (10) selon l'une quelconque des revendications précédentes, présentant en outre des cinquièmes appareils de dosage, par l'intermédiaire desquels les premières chambres de mélange (20) sont raccordées fluidiquement à la première conduite circulaire (35) ou à la conduite de dérivation, les cinquièmes appareils de dosage comprenant chacun une soupape de dosage.

12. Dispositif de pulvérisation (10) selon l'une quelconque des revendications précédentes, lorsqu'elles dépendent de la revendication 2, dans lequel la deuxième conduite circulaire (100) ou conduite de dérivation présente une section (110), de préférence une section guidée le long de la rampe de pulvérisation (11), dont le diamètre intérieur devient plus petit dans la direction d'écoulement, de préférence devient progressivement plus petit, la section (110) s'étendant le long des points de dérivation (103) des dérivations (18) de la deuxième conduite circulaire (100) ou de la conduite de dérivation.

13. Dispositif de pulvérisation (10) selon la revendication 12, dans lequel le diamètre intérieur devenant plus petit est défini de telle sorte qu'une vitesse d'écoulement du liquide à pulvériser
a) au moins à un point de dérivation (103) situé en aval d'un premier point de dérivation (103) est au moins aussi élevée qu'au premier point de dérivation (103) ; et/ou
b) ne diminue pas de manière continue dans la section et/ou ne varie pas de plus de 2 m/s, de manière davantage préférée pas de plus de 1 m/s, entre le premier et le dernier point de dérivation (103).

14. Dispositif de pulvérisation (10) selon l'une quelconque des revendications précédentes, dans lequel
a1) la première chambre de mélange (20) présentant plusieurs sorties de distribution (23) côté sortie, ou
a2) en aval d'une sortie (24) de la première chambre de mélange (20A), un distributeur de fluide est agencé pour répartir le liquide à pulvériser en plusieurs courants partiels, présentant plusieurs sorties de distributeur (23) pour les courants partiels, et
b) les éléments de déchargement (13) agencés en aval de la première chambre de mélange respective (20, 20A) sont chacun reliés à l'une des sorties de distributeur (23) par l'intermédiaire d'une conduite de déchargement (15 ; 16).

15. Dispositif de pulvérisation (10) selon la revendication 14, dans lequel
a) chacun des éléments de déchargement (13) est relié fluidiquement à l'une des sorties de distributeur (14b) par l'intermédiaire d'une conduite de déchargement séparée (15) ; ou
b) au moins certaines des conduites de déchargement (16), de préférence toutes les conduites de déchargement (16), présentent chacune au moins un point de dérivation (16a) qui fournit une pluralité de branches de conduite (16b, 16c), une branche de conduite (16b, 16c) reliant le point de dérivation (16a) à un élément de déchargement (13), le point de dérivation (16a) étant éventuellement réalisé à la manière d'une dérivation en Y ou à la manière d'une dérivation en T.

16. Dispositif de pulvérisation (10) selon la revendication 14 ou 15, les conduites de déchargement (15 ; 16) étant réalisées de telle sorte que les flux partiels sortant d'une première chambre de mélange (20) ou du distributeur de fluide (28) présentent sur leurs trajets de flux partiels séparés de la première chambre de mélange (20) ou du distributeur de fluide (28) vers les éléments de déchargement respectifs (13) essentiellement la même chute de pression et le même retard temporel jusqu'à ce que les flux partiels arrivent à l'élément de déchargement respectif.

17. Dispositif de pulvérisation (10) selon l'une quelconque des revendications 14 à 16, dans lequel les conduites de déchargement (15 ; 16) qui sont raccordées au même distributeur de fluide (28) ou à la même première chambre de mélange (20) présentent chacune la même longueur, ou dans lequel toutes les conduites de déchargement (15 ; 16) présentent la même longueur.

18. Dispositif de pulvérisation (10) selon l'une quelconque des revendications 14 à 17, dans lequel au moins une partie des conduites de déchargement (15 ; 16)
a) sont conçues sous forme de tuyaux et/ou sous forme de conduites flexibles ; et/ou
b) présentent un tracé non rectiligne, de préférence incurvé, et/ou
c) présentent au moins une section qui est guidée dans la direction longitudinale (B) du bras le long de l'un des bras et présentent au moins une section qui est guidée dans la direction verticale (V) le long de l'un des bras.

19. Dispositif de pulvérisation (10) selon l'une quelconque des revendications précédentes,
a) dans lequel le premier appareil de dosage, l'au moins un troisième appareil de dosage et/ou le quatrième appareil de dosage selon la revendication 3 comprennent une soupape de dosage réalisée sous forme de soupape à modulation de largeur d'impulsion ; et/ou
b) dans lequel le deuxième appareil de dosage ou d'alimentation en fluide ne comprend pas de soupape de dosage.

20. Dispositif de pulvérisation (10) selon l'une quelconque des revendications précédentes, dans lequel une conduite de rinçage est raccordée à l'au moins un troisième réservoir (51) du troisième système de dosage (50), par l'intermédiaire de laquelle de l'eau claire peut être amenée au troisième réservoir (51) à partir du premier système de dosage (30) et/ou du deuxième système de dosage ou d'alimentation (40) dans un mode de nettoyage afin de nettoyer le troisième réservoir (57).

21. Dispositif de pulvérisation (10) selon l'une quelconque des revendications précédentes, dans lequel un agitateur est agencé dans un ou plusieurs de l'au moins un troisième réservoir (51) afin d'éviter ou de réduire les dépôts du troisième liquide à pulvériser.

22. Dispositif de pulvérisation (10) selon l'une quelconque des revendications précédentes,
a) dans lequel les éléments de déchargement (13) sont des buses de pulvérisation ou des blocs de buses présentant des buses de pulvérisation ; et/ou
b) dans lequel la rampe de pulvérisation est agencée de manière mobile autour d'un axe de pivotement (A) s'étendant dans la direction de la marche, directement ou indirectement, sur un véhicule porteur (2), et/ou dans lequel les deux bras latéraux (12) sont reliés de manière pivotante à une partie centrale (11a) de la rampe de pulvérisation (11) par l'intermédiaire d'un axe de pivotement vertical, et dans lequel chaque bras (12) présentant des segments pivotants les uns par rapport aux autres, qui peuvent pivoter les uns par rapport aux autres autour d'axes verticaux et qui peuvent pivoter les uns par rapport aux autres dans un plan agencé perpendiculairement à la direction de la marche de la machine agricole de distribution.

23. Pulvérisateur de champ agricole (1), comprenant un dispositif de pulvérisation (10) selon l'une quelconque des revendications précédentes, le pulvérisateur de champ étant par exemple un pulvérisateur de champs automoteur (1) ou un pulvérisateur de champ tracté au moyen d'un véhicule tracteur ou monté sur un véhicule tracteur.
